(19) Europäisches Patentamt
European Patent Office
Office européen des brevets

(11) EP 4 807 452 A1

(12) EUROPEAN PATENT APPLICATION

(43) Date of publication:
**16.09.2026 Bulletin 2026/38**

(21) Application number: **26163179.0**

(22) Date of filing: **09.03.2026**

(51) International Patent Classification (IPC):
***G03G 15/02*** *(2006.01)*

(52) Cooperative Patent Classification (CPC):
**G03G 15/0233**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.03.2025 JP 2025037200**
**19.02.2026 JP 2026025128**

(71) Applicant: **Canon Kabushiki Kaisha**
**Tokyo 146-8501 (JP)**

(72) Inventors:
- **HONGO, Masatsugu**
  **Ohta-ku, Tokyo, 146-8501 (JP)**
- **KURACHI, Masahiro**
  **Ohta-ku, Tokyo, 146-8501 (JP)**
- **WATANABE, Hiroaki**
  **Ohta-ku, Tokyo, 146-8501 (JP)**
- **KIKUCHI, Yuichi**
  **Ohta-ku, Tokyo, 146-8501 (JP)**

(74) Representative: **TBK**
**Bavariaring 4-6**
**80336 München (DE)**

# (54) CHARGING ROLLER, PROCESS CARTRIDGE, AND ELECTROPHOTOGRAPHIC IMAGE FORMING APPARATUS

(57) A charging roller includes: a plurality of protruding portions that are present on a surface of the charging roller, in which when a group of protruding portions with heights of 10.0 μm to 40.0 μm is defined as a first protruding portion group, and a group of protruding portions with heights of 0.2 μm to 5.0 μm is defined as a second protruding portion group, the number of the first protruding portion group and the second protruding portion group falls within a specific range, the number of protruding portions with heights exceeding 40.0 μm is small, and universal hardnesses of the protruding portions included in the first protruding portion group and the protruding portions included in the second protruding portion group are within specific ranges.

FIG. 2

21
2
23
22

EP 4 807 452 A1

## Description

TECHNICAL FIELD

The present disclosure relates to a charging roller, a process cartridge, and an electrophotographic image forming apparatus that can be used for electrophotography.

BACKGROUND

In an electrophotographic image forming apparatus (hereinafter, also referred to as an "electrophotographic apparatus"), a conductive member is used as an electrophotographic member such as a charging member, a transfer member, and a developing member. The conductive member plays a role in transporting a charge from a conductive support to a conductive member surface and giving the charge to an abutting member through discharge or frictional charging. As an example of a conductive member for electrophotography, a configuration including a conductive support and a conductive layer provided on the support is known.

A charging member causes discharge between the charging member and an electrophotographic photosensitive member to charge the surface of the electrophotographic photosensitive member and is required to uniformly charge the electrophotographic photosensitive member. In recent years, specifications capable of maintaining uniform charging characteristics even in a case of utilization for a long period of time in charging members have been required, with an extension of service life of electrophotographic image forming apparatuses.

Japanese Patent Laid-Open No. 2018-084653 discloses a charging member that enables uniform charging performance to be achieved by controlling a surface shape profile.

SUMMARY

In recent years, there has been an increasing demand for a system for reducing a load on a driving system from the viewpoint of extending the service life of an electrophotographic apparatus. For example, a light-pressure cleaning system for reducing an abutting pressure of a cleaning blade having the highest load in order to suppress the load on a drive motor for a photosensitive drum is exemplified. In the light-pressure cleaning system, since the abutting pressure (penetration amount) of the cleaning blade with respect to the photosensitive drum is reduced, contamination of a toner, external additives, and the like remaining on the photosensitive drum is thus apt to pass therethrough. The contamination that has passed therethrough adheres to the surface of the charging member and manifests as an image defect.

Image problems caused by the toner, the external additives, and the like that adhere to the charging member in this manner can be suppressed by causing the cleaning member to abut on the charging member to remove the adhering matter on the surface of the charging member. However, it is not preferable to provide the cleaning member in the charging member in terms of size reduction of the electrophotographic apparatus.

The present inventors investigated a configuration in which an abutting pressure of a cleaning blade abutting on a photosensitive drum is weakened by using a conductive member according to Japanese Patent Laid-Open No. 2018-084653 as a charging member. As a result, the present inventors have recognized that a toner, external additives, and the like, that passed through the cleaning blade during long-term use adhere to the surface of the charging member and streak-like image density unevenness (hereinafter, also referred to as a "vertical streak image") is formed in correspondence with adhering portions.

The present disclosure provides a charging roller that can be applied to a light-pressure cleaning system with an extended service life and can maintain image formation with high quality even in a case of long-term utilization. The present disclosure also provides a process cartridge and an electrophotographic image forming apparatus that can be applied to a light-pressure cleaning system with an extended service life and can maintain image formation with high quality even in a case of long-term utilization.

The present disclosure in its first aspect provides a charging roller as specified in claim 1. Optional features are specified in claim 2 to 12.

The present disclosure in its second aspect provides a process cartridge attachable to and detachable from a main body of an electrophotographic image forming apparatus as specified in claim 13.

The present disclosure in its third aspect provides an electrophotographic image forming apparatus as specified in claim 14.

According to the present disclosure, it is possible to provide a charging roller which can be applied to a light-pressure cleaning system with an extended service life and which can maintain high-quality image formation even after long-term utilization. According to the present disclosure, it is possible to provide a process cartridge and an electrophotographic apparatus which can be applied to a light-pressure cleaning system with an extended service life and which can maintain high-quality image formation even after long-term utilization.

Features of the present disclosure will become apparent from the following description of embodiments with reference to the attached drawings. The following description of embodiments is described by way of example.

BRIEF DESCRIPTION OF THE DRAWINGS

FIG. 1A and FIG. 1B are sectional views of a surface layer of a charging roller.
FIG. 2 is a schematic sectional view of the charging roller.
FIG. 3 is an explanatory diagram of a graph of an impedance characteristic.
FIG. 4 is an explanatory diagram of a behavior of the impedance.
FIG. 5 is a schematic view illustrating a structure of domains.
FIG. 6 is an overview diagram of a process cartridge.
FIG. 7 is an overview diagram of an electrophotographic apparatus.
FIG. 8 is an overview diagram of a state where a measurement electrode has been formed in the charging roller.
FIG. 9 is a sectional view of the measurement electrode.
FIG. 10 is an overview diagram of an impedance measurement system.

DESCRIPTION OF THE EMBODIMENTS

In the present disclosure, unless otherwise specified, the expressions "from XX to YY" or "XX to YY" representing a numerical range refer to a numerical range that includes both the lower and upper limits. When a numerical range is stated in stages, the upper and lower limits of each numerical range can be arbitrarily combined. Furthermore, in the present disclosure, a statement such as "at least one selected from the group consisting of XX, YY, and ZZ" means any of XX, YY, ZZ, a combination of XX and YY, a combination of XX and ZZ, a combination of YY and ZZ, or a combination of XX, YY, and ZZ. When XX is a group, multiple members may be selected from XX, and the same applies to YY and ZZ.
Hereinafter, an embodiment of the present disclosure will be described in detail with reference to the drawings. However, components described in the embodiment are described only for the illustrative purpose and are not intended to limit the scope of the present disclosure thereto.
In the electrophotographic process, an electrostatic latent image is formed by a laser beam on a photosensitive drum charged by a charging roller, and a developer image is formed by developing the electrostatic latent image with a charged toner. The developer image is then transferred to and fixed on paper to form an image.
At this time, contamination of the toner, external additives, and the like that have not been transferred to the paper remain on the photosensitive drum. In order to prevent the contamination remaining on the photosensitive drum from adhering to the charging member, a configuration in which the contamination is scraped off by a cleaning member so as not to affect an image is typically used.
Since an abutting pressure of the cleaning member with respect to the photosensitive drum is high, the surface of the photosensitive drum is scratched or worn by an external mechanical force when the contamination reaches the abutting portion and is scraped off. In recent years, a light-pressure cleaning system with a reduced abutting pressure of a cleaning member has been required as a light-load system in response to an extension of service life of an electrophotographic apparatus.
Although some systems do not use any cleaning members, it is difficult to extend the service life of the electrophotographic apparatus in consideration of the amount of contamination which reaches the charging member.
In view of the above circumstances, a charging roller capable of suppressing adhesion of contamination with a light-pressure cleaning system is needed in order to address the extension of service life of the electrophotographic apparatus.
A behavior of the contamination adhering to the charging member will be described below.
The contamination of the toner, the external additives, and the like remaining on the photosensitive drum and having passed through the cleaning blade shifts to the side of the charging roller at a contact portion between the photosensitive drum and the charging roller. The contaminant adhering to the surface of the charging roller is pressed against the photosensitive drum and is thereby fixed through the abutting every time the charging roller and the photosensitive drum come into contact with each other.
The toner and the external additives remaining on the photosensitive drum after the transfer process, and paper powder, a filler, and the like contained in the printing paper and having shifted to the photosensitive drum (hereinafter, collectively referred to as "contamination") are charged through discharge in the transfer process.
Furthermore, a strong voltage of about -1000 V is usually applied to the charging roller, and a strong electric field between itself and the photosensitive drum is needed. Furthermore, since the polarities in the transfer process and the charging process are reversed in many cases, the contaminant flies and shifts to the surface of the charging roller due to an

electrostatic force.

As described above, many factors causing the adhesion of contamination to the charging roller act in a complex manner, and it is thus not easy to suppress the adhesion of contamination for a long period of time.

As described above, the present inventors have recognized as a result of intensive studies that according to the light-pressure cleaning system using the charging roller in Japanese Patent Laid-Open No. 2018-084653, contaminants such as external additives and a toner adhere to the surface of the charging member and appear as vertical streak images.

The reason why the vertical streak images are generated during long-term image formation in the case where the conductive member according to Japanese Patent Laid-Open No. 2018-084653 is used as the charging roller in the light-pressure cleaning system is presumed as follows.

When the surface of the charging roller in Japanese Patent Laid-Open No. 2018-084653 after long-term use was observed in detail with an electron microscope, a state where external additives and toner components were strongly fixed at apexes of protruding portions that were present on the surface was observed. Furthermore, in the periphery of the protruding portions (plain portions), a state where external additives and toner components were not fixed while being present in a large amount under influences of the electrostatic force was observed.

The charging roller disclosed in Japanese Patent Laid-Open No. 2018-084653 has a surface state where many irregularities which constitute discharge points are formed in order to obtain a uniform charging property over a long period of time, and a large amount of large particle diameter resin particles and small particle diameter resin particles are added in a surface layer. Moreover, in Japanese Patent Laid-Open No. 2018-084653, a large amount of resin particles with high hardness is contained because nylon particles are used as resin particles.

Therefore, the number of contact points with the photosensitive drum increases, and more contamination shifts to the surface of the charging roller. In addition, since the resin particles have high hardness, the shifted contamination is likely to be fixed to the contact portions.

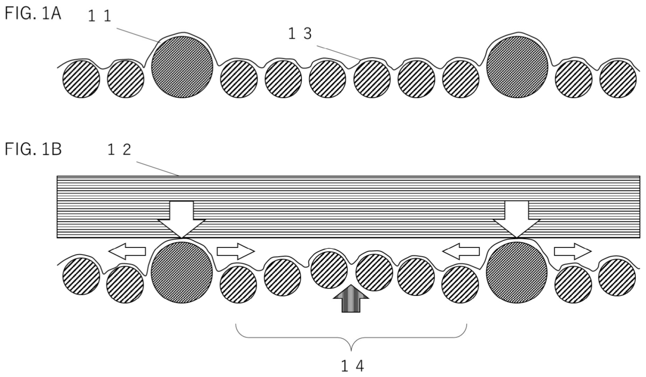

FIG. 1A illustrates a sectional view of the charging roller surface layer in Japanese Patent Laid-Open No. 2018-084653. FIG. 1A illustrates a section at the time of not abutting on the photosensitive drum. FIG. 1B illustrates a schematic sectional view at the time of abutting between the charging roller and the photosensitive drum. When a first protrusion 11 formed by the large particle diameter resin particles is brought into contact with the photosensitive drum 12, the large particle diameter resin particles 11 are pushed into the photosensitive drum 12. At this time, a strong reaction force is generated on the surface layer, and a region 14 where a protruding portion 13 formed by the small particle diameter resin particles is present rises in an arch shape due to the reaction force. Adhering contamination is peeled off by the arch-shaped rising and recovery being repeated.

However, in a case where the small particle diameter resin particles have high hardness, a region where the large particle diameter resin particles are not present has high hardness, and therefore, arch-shaped rising becomes unlikely to occur, and peeling-off of the contamination also becomes unlikely to occur, which leads to significant adhesion of the contamination. The vertical streak images are presumed to have occurred due to accumulation of the contaminants on the surface of the charging roller for the above reasons.

The present inventors have conceived on the basis of the above consideration that the height, the hardness, and the number of protruding portions formed on the surface of the charging roller are to be controlled. Specifically, the present inventors have found that vertical streaks due to adhesion of contamination can be suppressed in the light-pressure cleaning system by the charging roller including a surface structure that satisfies requirements (1) and (2) below.

Requirement (1):

The requirement (1) is a requirement related to a first protruding portion group. The charging roller according to the present disclosure has a surface layer, and a plurality of protruding portions are present on the surface of the charging roller. A group of protruding portions with heights of 10.0 μm to 40.0 μm among the plurality of protruding portions is regarded as a first protruding portion group.

When the charging roller has the first protruding portion group, and the number of apexes of the protruding portions included in the first protruding portion group per unit area on the surface of the charging roller is defined as Spd1, Spd1 is 10 pieces/mm$^2$ to 90 pieces/mm$^2$. When the universal hardness of the protruding portions included in the first protruding portion group measured under the condition of a pushing depth of 0.4 μm is defined as HU1, HU1 is 2.0 N/mm$^2$ to 5.0 N/mm$^2$. Furthermore, the number of apexes of the protruding portions with heights exceeding 40.0 μm per unit area on the surface of the charging roller is equal to or less than 3.0 pieces/mm$^2$.

Since only the first protruding portion group can come into contact with the photosensitive drum due to the presence of the first protruding portion group with the heights of 10.0 μm to 40.0 μm, the separation distance between the region that is not in contact with the photosensitive drum in the surface of the charging roller and the surface of the photosensitive drum increases. As a result, contamination on the drum becomes unlikely to fly to the surface of the charging roller.

If the protruding portions are small and the first protruding portion group cannot be formed, the gap between the

photosensitive drum and the charging roller becomes small, and the amount of adhering contamination increases, which leads to vertical streaks.

On the other hand, if there are too many protruding portions with the heights exceeding 40.0 μm, these protruding portions come into strong contact with the photosensitive drum, the photosensitive drum is thus scraped, the amount of contamination passing through the cleaning blade increases, and vertical streaks occur. Therefore, it is necessary that the number of apexes of the protruding portions with heights exceeding 40.0 μm be equal to or less than 3.0 pieces/mm$^2$.

Further, it is necessary that the number Spd1 of apexes of the protruding portions included in the first protruding portion group per unit area on the surface of the charging roller be 10 pieces/mm$^2$ to 90 pieces/mm$^2$. If Spd1 falls within the above range, it is possible to minimize the contact points between the charging roller and the photosensitive drum and to reduce the amount of contamination shifting from the surface of the photosensitive drum to the surface of the charging roller.

If the universal hardness HU1 of the protruding portions included in the first protruding portion group is 2.0 N/mm$^2$ to 5.0 N/mm$^2$, contamination having shifted from the surface of the photosensitive drum to the apexes of the first protruding portion group on the surface of the charging roller becomes unlikely to be fixed, and it is thus possible to suppress accumulation of the contamination.

Requirement (2):

The requirement (2) is a requirement related to a second protruding portion group. Among the plurality of protruding portions on the surface of the charging roller, a group of protruding portions with heights of 0.2 μm to 5.0 μm is defined as a second protruding portion group. The charging roller has the second protruding portion group, and when the number of apexes included in the second protruding portion group per unit area on the surface of the charging roller is defined as Spd2, Spd2 is 4000 pieces/mm$^2$ to 25000 pieces/mm$^2$. Also, universal hardness HU2 of the protruding portions included in the second protruding portion group measured under the condition of a pushing depth of 0.4 μm is equal to or greater than 1.0 N/mm$^2$ and less than 2.0 N/mm$^2$.

Since the second protruding portion group with the heights of 0.2 μm to 5.0 μm is present, it is possible to form irregularities in the region that is not in contact with the photosensitive drum on the surface of the charging roller. In this manner, the contact area between contamination and the surface of the charging roller when the contamination flies from the surface of the photosensitive drum can be reduced, and the contamination thus becomes unlikely to adhere.

The necessary number of irregularities for reducing the contact area between the charging roller and the contamination can be formed by setting the number Spd2 of apexes included in the second protruding portion group to 4000 pieces/mm$^2$ to 25000 pieces/mm$^2$.

It is possible to cause the surface layer to have low hardness by the universal hardness HU2 of the protruding portions included in the second protruding portion group being equal to or greater than 1.0 N/mm$^2$ and less than 2.0 N/mm$^2$. Therefore, the region where the first protruding portion group is not present becomes likely to rise in an arch shape, and peeling-off of the adhering contamination thus becomes likely to occur.

The heights of the protruding portions can be measured by scanning the surface of the charging roller with a laser microscope, a confocal microscope, a white confocal microscope, or the like. In the present disclosure, a laser microscope is used. Specific ways will be described later.

Spd represents the number of peak points present per unit area. A larger value indicates a larger number of contact points with other substances (ISO25178).

The measurement of Spd1 and Spd2 can be performed as follows.

As way of the measurement, it is only necessary to use a method capable of calculating Spd1 and Spd2 by scanning the surface of the charging roller. Specific examples thereof include a laser microscope, a confocal microscope, and a white confocal microscope. It is only necessary to calculate Spd1 corresponding to the amount of presence on the surfaces of first protruding portions and Spd2 corresponding to the amount of presence on the surface of the second protruding portions after the field surface profile of the charging roller is obtained using such a device. In the present disclosure, a laser microscope is used. Specific means will be described later.

The universal hardness of the protruding portions that are present on the surface of the charging roller is measured using, for example, a universal durometer (trade name: Fischer Scope HM 2000XYp, manufactured by Fischer Instrument GB Limited). The universal hardness is a physical property value determined by pushing an indenter into a measurement target while applying a load and is obtained as "(the test load)/(the surface area of the indenter under the test load) (N/mm$^2$)". An indenter with a quadrangular pyramid shape is pushed into the target to be measured while applying a predetermined relatively small test load, and the surface area with which the indenter is in contact is obtained from the pushing depth at the timing at which a predetermined pushing depth is reached, and the universal hardness is obtained by the above expression. Specific means will be described later.

The universal hardness can be controlled by chemical structures of resin components (a rubber material and a binder resin) contained in the surface layer, a material of particles forming the protruding portions, and the kinds and the

amounts of addition of a filler and a vulcanizing agent to be added to the base layer material.

The hardness of the surface may be controlled by surface treatment of the surface layer. Furthermore, in a case of a charging roller provided with a conductive surface layer, it is possible to control the hardness by the film thickness of the surface layer, an additive, a dispersant, and the like.

Hereinafter, the present disclosure will be described in detail using the drawings. Overview Configuration of Charging Roller

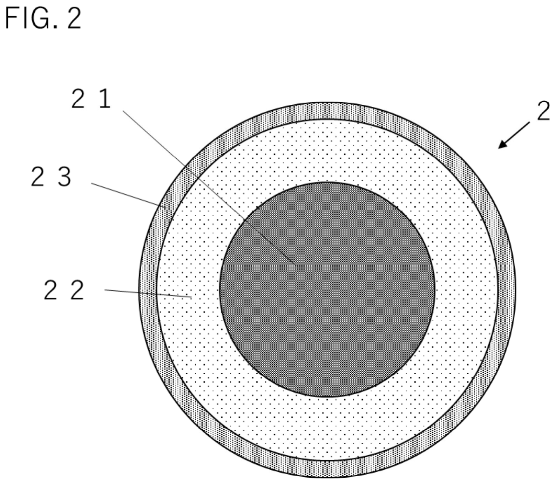

FIG. 2 is a schematic sectional view of an example of the charging roller 2. The charging roller 2 may have a surface layer 23. The charging roller 2 may include a conductive support (a core metal, a shaft core) 21 and a conductive base layer (elastic layer) 22 formed around the support 21. Surfaces (an outer circumferential surface and an outer surface) of the conductive elastic layer 22 may be provided with a conductive surface layer 23. The charging roller preferably includes the conductive support, the base layer provided on the support, and the surface layer provided on the base layer.

Conductive Support

The support 21 used in the charging roller 2 has conductivity and has a function of supporting the elastic layer 22 and the like provided around the support 21. Examples of a material of the support 21 include metal such as iron, copper, stainless steel, aluminum, nickel, and alloys thereof. For the purpose of imparting scratch resistance to these surfaces, plating may be performed thereon. Furthermore, a shaft core obtained by coating the surface of the base material made of a resin with metal to impart conductivity to the surface or a shaft core manufactured from a conductive resin composition may also be used as the support 21.

Furthermore, an adhesive layer (not illustrated) may be provided between the conductive support 21 and the elastic layer 22. In this case, the adhesive is preferably conductive. In order to provide conductivity, the adhesive can be appropriately selected from known conducting agents (for example, ion conducting agents and electron conducting agents), and one kind thereof can be used alone, or two or more kinds thereof can be used in combination.

Examples of the adhesive include thermosetting resins and thermoplastic resins, and it is possible to use known adhesives such as urethane-based, acrylic-based, polyester-based, polyether-based, epoxy-based adhesives and the like. Examples of the adhesive include Metalock N33 (manufactured by Toyokagaku Kenkyusho Co., Ltd.). As an adhesive application method, a well-known method such as a roll coater, sponge application, spray application, and the like can be used.

As the adhesive layer between the conductive support 21 and the elastic layer 22, an adhesive layer may be provided over the entire region of the surface where the conductive support 21 and the elastic layer 22 are in contact with each other, or may be provided in a partial region of the surface. For example, it is possible to provide adhesive layers only in a range of a width of 5 mm to 20 mm at both end portions of the surface where the conductive support 21 and the elastic layer 22 are in contact with each other in the longitudinal direction (rotational axis direction) of the charging roller 2. Note that "to" in regard to numerical ranges means that the numerical values before and after "to" are included. The thickness of the adhesive layer is preferably 1 μm to 10 μm from the viewpoint of adhesiveness between the support (shaft core) 21 and the elastic layer 22.

Conductive Surface Layer

The charging roller 2 may include the surface layer 23. The charging roller 2 preferably include the conductive surface layer 23 on the surface of the conductive base layer 22 as described above. The conductive surface layer 23 may be formed by adding a conducting agent to the binder resin.

The volume resistivity of the conductive surface layer 23 is preferably from $1.0 \times 10^5\ \Omega\cdot$cm to $1.0 \times 10^9\ \Omega\cdot$cm.

Binder Resin

The surface layer 23 may include a binder resin and a conducting agent. As the binder resin used for the surface layer 23, any known binder resin can be adopted. Examples thereof include a resin, natural rubber, binder resins obtained by vulcanizing the resin or the natural rubber, and synthetic rubber. As the resin, a thermosetting resin or a thermoplastic resin can be used. Among these, the binder resin is preferably at least one selected from the group consisting of a fluororesin, a polyamide resin, an acrylic resin, a polyurethane resin, a silicone resin, a butyral resin, and the like. It is further preferable that the binder resin include a polyurethane resin, and it is yet further preferable that the binder resin be a polyurethane resin.

The surface layer 23 preferably contains a conductive substance. As the conductive substance, it is possible to use a conducting agent such as an ion conducting agent or an electron conducting agent. Examples of the ion conducting agent include the following: inorganic ionic substances such as lithium perchlorate, sodium perchlorate, and calcium

chlorate, cationic surfactants such as lauryltrimethylammonium chloride, stearyl trimethyl ammonium chloride, octadecyltrimethylammonium chloride, dodecyltrimethylammonium chloride, hexadecyltrimethylammonium chloride, trioctylpropylammonium bromide, and modified aliphatic dimethylethylammonium ethosulfate, zwitterionic surfactants such as lauryl betaine, stearyl betaine, and dimethyl alkyl lauryl betaine, quaternary ammonium salts such as tetraethylammonium perchlorate, tetrabutylammonium perchlorate, and trimethyloctadecylammonium perchlorate, and lithium salts of organic acids such as lithium trifluoromethanesulfonate. These may be used alone or two or more thereof may be used in combination.

Examples of the electron conducting agents include the following: metal-based fine particles and fibers such as aluminum, palladium, iron, copper, and silver, metal oxides on which conductive treatment is performed, such as titanium oxide, tin oxide, and zinc oxide, composite particles in which the surfaces of the metal-based fine particles, fibers or metal oxides are subjected to a surface treatment by an electrolysis treatment, spray coating, or mixing and shaking, and carbon blacks such as furnace black, thermal black, acetylene black, and ketjen black, and carbon fiber such as polyacrylonitrile (PAN)-based carbon and pitch-based carbon. The conducting agent may contain carbon black.

Examples of furnace black include the following: SAF-HS, SAF, ISAF-HS, ISAF, ISAF-LS, I-ISAF-HS, HAF-HS, HAF, HAF-LS, T-HS, T-NS, MAF, FEF, GPF, SRF-HS-HM, SRF-LM, ECF, FEF-HS. Examples of thermal black include FT and MT. One kind of these conducting agents can be used alone, or two or more kinds thereof can be used in combination.

In addition, the average particle diameter of the conducting agent is more preferably 0.01 μm to 0.9 μm and is further preferably 0.01 μm to 0.5 μm. Within this range, the volume resistivity of the matrix can be easily controlled. The amount of such a conducting agent added to the surface layer 23 is appropriately within a range of 2 parts by mass to 80 parts by mass, preferably within a range of 20 parts by mass to 60 parts by mass with respect to 100 parts by mass of the binder resin.

The conducting agent may have a surface-treated surface. Examples of the surface treating agent that can be used include organic silicon compounds such as alkoxysilane, fluoroalkylsilane, and polysiloxane, various coupling agents such as silane-based, titanate-based, aluminate-based, and zirconate-based coupling agents, and oligomer or polymer compounds. One kind thereof may be used alone, or two or more kinds thereof may be used. Preferably, organic silicon compounds such as alkoxysilane and polysiloxanes, and various coupling agents such as silane-based, titanate-based, various aluminate-based, or zirconate-based coupling agents are preferably used, and organic silicon compounds are further preferably used.

The surface layer 23 may be surface-treated. Examples of the surface treatment include surface working treatment using UV or electron beams and surface modification treatment performing at least either attachment of a compound or the like to the surface or impregnation of the surface into a compound or the like. The thickness of the surface layer 23 is, for example, 2.0 μm to 22.0 μm and is preferably 2.0 μm to 20.0 μm.

It is possible to support large-diameter particles and to prevent falling-off in a case where the first protruding portions are formed by the resin particles, by setting the thickness to be equal to or greater than 2.0 μm. It is also possible to form the protruding portions without the resin particles being embedded in the case where the first protruding portions are formed by the resin particles, by setting the thickness to be equal to or less than 20.0 μm. A more preferable range of the thickness of the surface layer 23 is 4.0 μm to 15.0 μm.

The average value of the layer thicknesses at parts of the surface layer where the first resin particles and the second resin particles are not present is preferably 4.0 μm to 15.0 μm and is more preferably 4.0 μm to 12.0 μm.

Note that the film thickness of the surface layer can be measured by cutting a section of the roller with a sharp knife and observing it with an optical microscope or an electron microscope.

Surface Layer Protruding Portions Derived from Electron Conducting Agent

It is preferable that protruding portions derived from exposed portions of an electron conducting agent (conductive particles) be present on the surface of the surface layer in order to inject charge to contaminant. The surface layer preferably includes protruding portions formed by the electron conducting agent being exposed to the surface of the surface layer. The sizes of the protruding portions derived from the exposed portions of the conductive particles are preferably from 5.0 nm to 100.0 nm. In order to inject the charge to the contaminant by using the protruding portions derived from the conductive fine particles, it is effective to control the number of protruding portions.

The number of protruding portions derived from the exposed portions of the conductive fine particles is preferably 50 to 500 in a region (a region of 4.0 $\mu m^2$) of 2.0 μm in the vertical direction and 2.0 μm in the horizontal direction in observation of the surface of the surface layer with a scanning electron microscope. It is possible to secure the number of protruding portions as start points from which the charge is injected to the contaminant by setting the number to be equal to or greater than 50. It is possible to suppress the injection of charge to the photosensitive member by setting the number to be equal to or less than 500.

The number of protruding portions derived from the exposed portions of the conductive fine particles in the region (the region of 4.0 $\mu m^2$) of 2.0 μm in the vertical direction and 2.0 μm in the horizontal direction in the observation of the

surface of the surface layer with the scanning electron microscope was more preferably 100 to 300 and is further preferably 150 to 250. The number of protruding portions can be calculated by capturing an image of the square region with a side of 2 μm using the scanning electron microscope (SEM) and calculating the number of conductive points from an image after binarization.

It is preferable that the surface layer contain carbon black and the carbon black be exposed to the surface of the surface layer. In addition, it is preferable that protruding portions formed by the carbon black being exposed be present on the surface layer.

Next, a method of exposing conductive fine particles to the surface of the surface layer will be described. In a case where the surface layer is formed on the base layer (conductive elastic layer) of the conductive member by dipping coating, the skin layer is typically formed on the outermost surface of the surface layer. Therefore, it is effective to remove the outermost skin layer in order to expose the conductive particles to the surface of the surface layer and form the protruding portions on the surface of the surface layer by the exposed portions.

For example, it is possible to expose the conductive particles to the surface of the surface layer by performing ultraviolet treatment, polishing, electropolishing, chemical polishing, ion milling, or the like to remove the surface skin layer of the binder resin. In a case where the hardness of the surface layer is low, it is possible to sufficiently remove the skin layer and to expose the conductive fine particles to the surface of the surface layer even by performing ultraviolet treatment. The ultraviolet treatment is preferable as compared with polishing and the like since the conductive particles can be exposed to the surface of the surface layer while damage on the surface layer is minimized.

The exposed state of the conductive fine particles can be checked using an interelectron force microscope (AFM). The height image is acquired in an AFM tapping mode. In this case, parts derived from the exposed portions of the conductive fine particles are observed as protruding portions. In a case where the height image is acquired in a state where the skin layer after the dip coating is present, the protruding portions are not observed. Furthermore, a phase image is acquired in the AFM tapping mode. In this case, an image with a significantly large shading contrast difference can be obtained due to a small phase deviation of the conductive fine particles and a difference in hardness between the binder resin and the conductive fine particles. In a case where the phase image is acquired in a state where the skin layer after the dip coating is present, the number of phase differences is significantly small, and an image with a low contrast difference is acquired.

Formulation of Plurality of Protruding Portions on Surface of Charging Roller

A plurality of protruding portions forming the first protruding portion group and the second protruding portion group are present on the surface of the charging roller. For example, the surface layer may include the plurality of protruding portions. The protruding portions on the surface layer can be formed by addition of coarsening particles to the surface layer, addition of coarsening particles to the base layer, polishing of the base layer, laser machining, or the like.

Examples of the coarsening particles for forming the protruding portions include the following: resin particles such as (meth)acrylic resins, polyurethane resins, styrene resins, fluororesins, and silicone resins; inorganic insulating particles such as titanium oxide, silica, alumina, magnesium oxide, strontium titanate, barium titanate, barium sulfate, calcium carbonate, mica, zeolite, and bentonite. One kind of these particles may be used, or two or more kinds may be used in combination.

The coarsening particles are preferably resin particles. As a method of forming the first protruding portion group and the second protruding portion group, the surface layer is preferably caused to contain first resin particles corresponding to the first protruding portion group and second resin particles corresponding to the second protruding portion group.

The first resin particles correspond to protruding portions included in the first protruding portion group, for example, and have particle diameters corresponding to the protruding portions. The first protruding portion group can be formed on the surface layer by adding the first resin particles to the binder resin. In other words, the protruding portions included in the first protruding portion group are preferably protruding portions derived from the first resin particles. The material and the average particle diameter of the particles may be selected such that Spd1 and HU1 become desired values. The first resin particles preferably include at least one selected from the group consisting of a (meth)acrylic resin and a polyurethane resin, and the first resin particles more preferably include a polyurethane resin.

The second resin particles correspond to protruding portions included in the second protruding portion group, for example, and have particle diameters corresponding to the protruding portions. The second protruding portion group can be formed on the surface layer by adding the second resin particles to the binder resin. In other words, the protruding portions included in the second protruding portion group are preferably protruding portions derived from the second resin particles. The material and the average particle diameter of the particles may be selected such that Spd2 and HU2 become desired values. The second resin particles preferably include a polyurethane resin.

The volume average particle diameter Dv1 of the first resin particles is preferably 15.0 μm to 30.0 μm and is more preferably 18.0 μm to 30.0 μm.

The volume average particle diameter Dv2 of the second resin particles is preferably 3.0 μm to 10.0 μm and is

more preferably 4.0 μm to 9.0 μm.

It is possible to easily form the first protruding portion group and the second protruding portion group with preferable heights and to more easily suppress vertical streaks by the volume average particle diameter falling within the above range.

First Protruding Portion Group

The height of the first protruding portion group is 10 μm to 40 μm. It is possible to form a gap between the photosensitive member and the charging roller and to curb adhesion of the contaminant remaining on the photosensitive member to the surface of the charging roller by setting the height to be equal to or greater than 10 μm. Furthermore, it is possible to suppress occurrence of discharge that is greater than 1 dot and to thereby uniformly charge the surface of the photosensitive member by setting the height to be equal to or less than 40 μm.

The number Spd1 of the apexes of the protruding portions included in the first protruding portion group is 10 pieces/mm$^2$ to 90 pieces/mm$^2$. A load applied to the protruding portions when the protruding portions abut on the photosensitive member and are pressurized against the photosensitive member is dispersed, recesses at the protruding portions can be suppressed, and it thus becomes easy to form the gap between the photosensitive member and the charging roller, by Spd1 being equal to or greater than 10 pieces/mm$^2$. It is possible to reduce the contact points with the photosensitive member and to thereby suppress the total amount of contamination adhering to the charging roller, by Spd1 being equal to or less than 90 pieces/mm$^2$. Therefore, it becomes easy to suppress vertical streaks. Spd1 is preferably 30 pieces/mm$^2$ to 60 pieces/mm$^2$.

Spd1 can be adjusted by changing the number average particle diameter and the amount of blending of the resin particles that can form the first protruding portion group. Spd1 is likely to increase when more resin particles having particle diameters that can form the first protruding portion group are added.

The universal hardness HU1 of the protruding portions included in the first protruding portion group is 2.0 N/mm$^2$ to 5.0 N/mm$^2$. It is possible to suppress recesses at the protruding portions when the protruding portions abut on the photosensitive member and to form the gap between the photosensitive member and the charging roller, by setting HU1 to be equal to or greater than 2.0 N/mm$^2$. It is possible to suppress fixing of the contaminant remaining on the photosensitive member to the apex portions of the first protruding portion group by setting HU1 to be equal to or less than 5.0 N/mm$^2$. HU1 is preferably 3.0 N/mm$^2$ to 5.0 N/mm$^2$ and is more preferably 3.5 N/mm$^2$ to 4.5 N/mm$^2$.

Although a method of forming the first protruding portion group is not particularly limited, examples of the method of forming the protruding portions include addition of resin particles to the surface layer. As the resin particles to be added, resin particles including polyurethane are preferably used.

The average height of the protruding portions in the first protruding portion group can be adjusted by the number average particle diameter of the coarsening particles, such as the resin particles to be added. The average height of the protruding portions in the first protruding portion group is, for example, 10.0 μm to 40.0 μm, is preferably 12.0 μm to 39.5 μm, and is more preferably 13.0 μm to 20.0 μm. The first protruding portion group is preferably formed, the gap can be formed between the photosensitive drum and the charging roller, and it becomes easier to suppress adhesion of contaminant to the charging roller, by setting the average height of the protruding portions to be equal to or greater than 10.0 μm. Therefore, it becomes easier to suppress vertical streaks. Furthermore, it is possible to suppress occurrence of discharge that is greater than 1 dot and to thereby achieve high-quality image formation, by setting the average height of the protruding portions to be equal to or less than 40.0 μm.

The universal hardness HU1 of protruding portions included in the first protruding portion group is 2.0 N/mm$^2$ to 5.0 N/mm$^2$, is preferably 3.0 N/mm$^2$ to 5.0 N/mm$^2$, and is more preferably 3.5 N/mm$^2$ to 4.5 N/mm$^2$. It becomes easy to form the gap between the photosensitive member and the charging roller by HU1 falling within the above range. The universal hardness HU1 of the protruding portions included in the first protruding portion group can be adjusted by an elastic modulus E'1 of the resin particles forming the first protruding portion group, for example.

The elastic modulus E'1 of the first resin particles forming the first protruding portion group is preferably 100 MPa to 2000 MPa, is more preferably 500 MPa to 1500 MPa, and is further preferably 800 MPa to 1200 MPa. It is possible to suppress deformation of the resin particles when the resin particles are pressed through abutting on the photosensitive member and to easily form the gap between the photosensitive member and the charging roller, by setting E'1 to be equal to or greater than 100 MPa. Also, it is possible to suppress fixing of the contaminant at the abutting portion of the charging roller on the photosensitive member, that is, the apex portions of the first protruding portions by setting E'1 to be equal to or less than 2000 MPa. Therefore, it becomes easier to suppress vertical streaks.

The number of apexes of protruding portions with heights exceeding 40.0 μm per unit area on the surface of the charging roller is preferably 0 pieces/mm$^2$ to 3.0 pieces/mm$^2$ and is more preferably 0 pieces/mm$^2$ to 1.5 pieces/mm$^2$. It becomes easier to suppress vertical streaks by the number falling within the above range. The number of apexes can be controlled by the particle diameters of the resin particles to be added to the surface layer, for example.

Second Protruding Portion Group

The heights of the second protruding portion group are 0.2 μm to 5.0 μm. It is possible to suppress adhesion of the contaminant by reducing the contact area with the contaminant and reducing an adhesion force, and it becomes easy to suppress vertical streaks, by setting the height to be equal to or greater than 0.2 μm. Furthermore, it is possible to avoid contact of the second protruding portions with the photosensitive member and to suppress fixing of the contamination at the apex portions by setting the height to be equal to or less than 5.0 μm. Therefore, it becomes easy to suppress vertical streaks.

The number Spd2 of apexes of the protruding portions included in the second protruding portion group is 4000 pieces/$mm^2$ to 25000 pieces/$mm^2$. It is possible to sufficiently coarsen the surface of the charging roller, to suppress the contact area with the contaminant, and to curb adhesion of the contaminant, by setting Spd2 to be equal to or greater than 4000 pieces/$mm^2$. Therefore, it becomes easy to suppress vertical streaks. It is possible to reduce the number of small particle diameter particles included in the binder resin and to suppress breakage at the interface between the particles and the binder resin by setting Spd2 to be equal to or less than 25000 pieces/$mm^2$. Spd2 is preferably 4000 pieces/$mm^2$ to 12000 pieces/$mm^2$ and is more preferably 7000 pieces/$mm^2$ to 12000 pieces/$mm^2$.

Spd2 can be adjusted by the number average particle diameter and the amount of blending of the resin particles to be added, similarly to Spd1. It is possible to suppress the amount of interface between the binder resin and the resin particles and to easily suppress breakage of the surface layer, by adjusting Spd2 to be equal to or less than 25000 pieces/$mm^2$.

Universal hardness HU2 of the protruding portions included in the second protruding portion group is equal to or greater than 1.0 N/$mm^2$ and less than 2.0 N/$mm^2$. The plain portion becomes likely to rise in an arch shape when the drum and the charging roller abut on each other, and the adhering contamination is likely to be peeled off, by setting HU2 to be less than 2.0 N/$mm^2$. Therefore, it becomes easy to suppress vertical streaks. HU2 is preferably 1.0 N/$mm^2$ to 1.9 N/$mm^2$ and is more preferably 1.0 N/$mm^2$ to 1.7 N/$mm^2$.

The universal hardness HU2 of the protruding portions included in the second protruding portion group can be adjusted by an elastic modulus E'2 of the resin particles forming the second protruding portion group, for example. The elastic modulus E'2 of the second resin particles forming the second protruding portion group is, for example, 2 MPa to 50 MPa, is preferably 10 MPa to 50 MPa, is more preferably 20 MPa to 40 MPa, and is further preferably 25 MPa to 35 MPa.

Although a method of forming the second protruding portion group is not particularly limited, examples of the method of forming the protruding portions include addition of resin particles to the surface layer. Examples thereof includes a method of adding resin particles that can achieve HU2 and have particle diameters with which the second protruding portion group can be obtained in an amount in which Spd2 can be satisfied.

The average height of the protruding portions in the second protruding portion group is, for example, 0.2 μm to 5.0 μm, is preferably 1.0 μm to 4.0 μm, and is more preferably 1.5 μm to 3.0 μm. The average height of the protruding portions in the second protruding portion group can be adjusted by the number average particle diameter of the coarsening particles to be added.

Proportion of First Protruding Portions and Second Protruding Portions

The number of apexes of the protruding portions with heights of equal to or greater than 0.2 μm per unit area (apex tensity) on the surface of the charging roller is defined as Spda (pieces/$mm^2$). At this time, the proportions of the first protruding portions and the second protruding portions represented by (Spd1 + Spd2)/Spda × 100 are preferably equal to or greater than 98.0%. When protruding portions that are higher than the second protruding portions and are lower than the first protruding portions and protruding portions that are higher than the first protruding portions are defined as third protruding portions, (Spd1 + Spd2)/Spda × 100 of equal to or greater than 98.0% indicates that the number of third protruding portions is small. Since only the first protruding portions come into contact with the photosensitive drum by reducing the third protruding portions, it is possible to minimize the number of contact points with the photosensitive drum and to further reduce the amount of adhesion of the contamination.

(Spd1 + Spd2)/Spda × 100 is preferably equal to or greater than 98.4%. Although an upper limit is not particularly limited since larger (Spd1 + Spd2)/Spd × 100 is more preferable, examples of the upper limit include 98.0% to 100.0%, 98.4% to 100.0%, and 98.4% to 99.9%.

(Spd1 + Spd2)/Spda × 100 can be increased by adopting sharp particle size distribution of the resin particles that can form the first protruding portions and the second protruding portions, for example.

Method of Measuring Protrusion Heights

The protrusion heights can be measured by scanning the surface of the charging roller. Specific examples thereof include a laser microscope, a confocal microscope, and a white confocal microscope. It is only necessary to measure the

heights of the protruding portions using analysis software attached to the apparatus after the surface profile of the charging roller is obtained using the apparatus. A specific method will be described later.

Method of Measuring Spd1, Spd2, and Proportion of First Protruding Portions and Second Protruding Portions

The measurement of Spd1 and Spd2 can be performed as follows. Spd represents the number of peak points that are present per unit area. Larger Spd indicates that the number of contact points with other objects is larger (ISO25178).
As a measuring way, a method capable of calculating Spd1 and Spd2 by scanning the surface of the charging roller may be used. Specific examples include a laser microscope, a confocal microscope, and a white confocal microscope. It is only necessary to measure the apex density Spda of the protruding portions with heights of equal to or greater than 0.2 μm, the apex density Spd1 of the first protruding portions, and the apex density Spd2 of the second protruding portions by using analysis software attached to the apparatus after the surface profile of the charging roller is obtained using the apparatus. It is possible to calculate the proportion (%) of the first protruding portions and the second protruding portions by using the following expression from measured Spda, Spd1, and Spd2. A specific method will be described later.

$$(Spd1 + Spd2)/Spda \times 100...(1)$$

Method of Measuring Universal Hardness

The universal hardness can be measured by a way capable of measuring the surface of the charging roller with an indenter. A specific method will be described later.

Other Additives

Other additives may be included in the surface layer as needed to such an extent that the effects of the present disclosure are not impaired. Examples of the additives that may be added include a chain extender, a crosslinking agent, a pigment, a silicone additive, amines or tin complexes as catalysts, and the like. Since the resistance of the surface layer is increased and a sliding property is given to the surface layer to suppress charge injection into the photosensitive member and to improve wear resistance of the surface layer in a case where a silicone additive is added to the surface layer, it is particularly preferable to add the silicone additive.

Method of Forming Surface Layer

The surface layer 23 can be formed by a coating method such as electrostatic spray coating or dipping coating. Alternatively, the surface layer 23 can be formed by bonding or applying a sheet-shaped or tube-shaped layer formed to have a predetermined film thickness in advance. Alternatively, a method of curing and molding a material into a predetermined shape in a die can also be used to form the surface layer 23. Among these, it is preferable to form a coating film by applying a coating material by a coating method.
In the case where the layer is formed by the coating method, any solvent may be used as a coating solution as long as the solvent can dissolve the binder resin. Specific examples include alcohols such as methanol, ethanol, and isopropanol, ketones such as acetone, methyl ethyl ketone, and cyclohexanone, amides such as N,N-dimethylformamide and N,N-dimethylacetamide, sulfoxides such as dimethylsulfoxide, ethers such as tetrahydrofuran, dioxane, ethylene glycol monomethyl ether, esters such as methyl acetate and ethyl acetate, aromatic compounds such as xylene, ligroin, chlorobenzene, and dichlorobenzene, and the like. These solvents are appropriately selected depending on the binder resin to be used. Examples of a method of dispersing the binder resins, the particles, and the like in the coating solution include using a known solution dispersing way such as ball milling, sand milling, a paint shaker, Dyno-Mill, and pearl milling.
The surface layer preferably contains a binder resin. The binder resin preferably contains a polyurethane resin. In a case where the surface layer is formed by the coating method, it is preferable to use a surface layer coating solution containing a urethane raw material.
The polyurethane resin can be obtained from a polyol and isocyanate, and as necessary, a urethane raw material including a chain extender. Examples of polyol, which is a raw material of the polyurethane resin, include polyether polyol, polyester polyol, polycarbonate polyol, polyolefin polyol, acrylic polyol, amine-based polyol, and mixtures thereof. Among the above examples, polyether polyol, polycarbonate polyol, and amine-based polyol are preferably used.
Examples of isocyanate, which is a raw material of the urethane resin include the following: tolylene diisocyanate (TDI), diphenyl methane diisocyanate (MDI), naphthalene diisocyanate (NDI), tolidinediisocyanate (TODI), hexamethylene diisocyanate (HDI), isophorone diisocyanate (IPDI), phenylene diisocyanate (PPDI), xylylene diisocyanate (XDI),

tetramethylxylylene diisocyanate (TMXDI), cyclohexane diisocyanate, polymeric MDI, and mixtures thereof.

Among the foregoing, polymeric MDI is preferable. Here, polymeric MDI is a mixture of monomeric MDI and a high molecular weight polyisocyanate, and is represented by the following formula (A). In the formula (A), n is preferably from 0 to 4.

Commercially available polymeric MDI may also be used, and examples thereof may include Millionate MR series (manufactured by Tosoh Corporation), such as Millionate MR200 (trade name).

NCO
NCO
OCN
n
(A)

As isocyanate, a prepolymer-type isocyanate compound that is obtained by causing the above-described various isocyanate compounds and various polyols to react in advance in a state of excessive isocyanate groups and that has an isocyanate group at a terminal may be used.

Examples include an isocyanate group-terminated isocyanate prepolymer using polymeric MDI and polyether polyol and isocyanate group-terminated isocyanate prepolymer using polymeric MDI and polycarbonate polyol.

The urethane resin may contain a chain extender. Examples of the chain extender include bifunctional low molecular diols such as ethylene glycol, 1,4-butanediol, and 3-methylpentanediol, trifunctional low molecular triols such as trimethylolpropane, and mixtures thereof.

Furthermore, a monool such as a polyether monool may be used as a urethane raw material.

It is possible to obtain a polyurethane resin by causing polyol and isocyanate to react by heating.

In the formation of the surface layer, the surface layer coating solution preferably contains the urethane raw material, a conducting agent such as carbon black, the first resin particles, and the second resin particles. The first protruding portion group and the second protruding portion group are easily formed by the surface layer coating solution.

The universal hardness of the binder resin as measured under the condition of the pushing depth of 0.4 $\mu$m is defined as HUb. At this time, HUb is, for example, 1.0 N/mm$^2$ to 11.0 N/mm$^2$, is preferably 1.0 N/mm$^2$ to 5.0 N/mm$^2$, is more preferably 2.0 N/mm$^2$ to 4.0 N/mm$^2$, and is further preferably 2.5 N/mm$^2$ to 3.5 N/mm$^2$. Peeking-off of the adhering contamination becomes likely to occur, and vertical streaks can be more easily suppressed, by HUb falling within the above range.

Base Layer

The charging roller may include a base layer on the conductive support. A configuration of the base layer (elastic layer) 22 is not limited, and it is only necessary to use a material that can be used as an elastic layer of the electrophotographic member. It is possible to use, for the conductive elastic layer 22, one kind of elastic body or two or more kinds of elastic bodies such as rubber used in the elastic layer (conductive elastic layer) of the charging roller, for example. Examples of rubber include the following: urethane rubber, silicone rubber, butadiene rubber, isoprene rubber, chloroprene rubber, styrene-butadiene rubber, ethylene-propylene rubber, polynorbornene rubber, styrene-butadiene-styrene rubber, acrylonitrile rubber, epichlorohydrin rubber, and alkyl ether rubber.

The conductivity of the elastic layer 22 can be set to a predetermined value by appropriately using a conducting agent. The base layer (elastic layer) 22 preferably contains rubber and the conducting agent. The electric resistivity of the elastic layer 22 can be adjusted by appropriately selecting the type and the amount of use of the conducting agent. A suitable range of the electric resistivity is $10^2$ $\Omega\cdot$cm to $10^8$ $\Omega\cdot$cm, and a more suitable range thereof is $10^3$ $\Omega\cdot$cm to $10^6$ $\Omega\cdot$cm.

As the conducting agent for the elastic layer 22, it is also possible to use conductive carbon such as Ketjen black EC, acetylene black, carbon for rubber, oxidized color (ink) carbon, or pyrolytic carbon. As the conducting agent for the elastic layer 22, it is also possible to use graphite such as natural graphite or artificial graphite. An inorganic or organic filler or crosslinking agent may be added to the elastic layer 22.

Inclination of Impedance

An impedance is measured by providing a platinum electrode directly on the outer surface of the charging roller

and applying an AC voltage with an amplitude of 1 V between the outer surface of the support and the platinum electrode in an environment at a temperature of 23°C and a relative humidity of 50% while the frequency is changed between $1.0 \times 10^2$ Hz and $1.0 \times 10^7$ Hz. An inclination in double logarithmic plotting of the frequency on the horizontal axis and the impedance on the vertical axis at the frequency of $1.0 \times 10^5$ Hz to $1.0 \times 10^6$ Hz is, for example, -1.00 to -0.30, is preferably -0.80 to -0.30, and is more preferably -0.50 to -0.30.

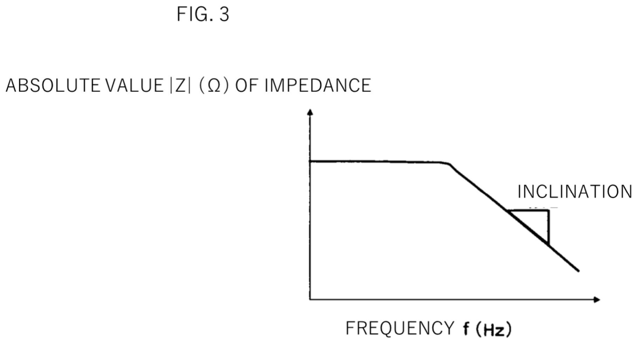

Inclination in double logarithmic plotting of the frequency on the horizontal axis and the impedance on the vertical axis at the frequency of $1.0 \times 10^5$ Hz to $1.0 \times 10^6$ Hz (hereinafter, also referred to as inclination of impedance) being -0.80 to -0.30 defines that stagnation of charge in the charging roller is unlikely to occur on the high-frequency side. When the impedance of the charging roller in the related art is measured, and double logarithmic plotting of the absolute value of the impedance of the charging roller on the vertical axis and the frequency on the horizontal axis is obtained, the inclination always becomes -1 on the high-frequency side. Here, the inclination means the inclination with respect to the horizontal axis in the double logarithmic plotting of the absolute value of the impedance of the charging roller on the vertical axis and the frequency on the horizontal axis as illustrated in FIG. 3. An equivalent circuit of the charging roller is represented as a parallel circuit of an electric resistance R and an electrostatic capacity C, and the absolute value |Z| of the impedance can be expressed by Expression (2) below. At this time, f in Expression (2) indicates the frequency.

$$|Z| = \sqrt{\frac{1}{R^{-2} + (2\pi f)^2 C^2}} \qquad (2)$$

The reason why the inclination becomes a straight line with an inclination of -1 can be presumed as follows. In other words. If motion of charge cannot be followed with respect to a voltage of a high frequency, the charge stagnates. Therefore, it is possible to presume that the electric resistivity R has significantly increased and a so-called insulation electrostatic capacity is being measured. The state where the charge stagnates can be estimated to be a state where R is approximated to infinity in Expression (2). At this time, it is possible to perform approximation in which $R^{-2}$ takes a very small value with respect to $(2\pi f)^2C^2$ in Expression (3) obtained by removing a denominator element from Expression (2). Therefore, Expression (2) can be deformed by performing approximation as in Expression (4) with $R^{-2}$ removed. Finally, if expression deformation to take the logarithm of both sides is performed on Expression (4), then Expression (5) is obtained, and the inclination of logf becomes -1.

$$R^{-2} + (2\pi f)^2 C^2 \qquad (3)$$

$$|Z| = \sqrt{\frac{1}{(2\pi f)^2 C^2}} \qquad (4)$$

$$\log|Z| = -\log f - \log(2\pi C) \qquad (5)$$

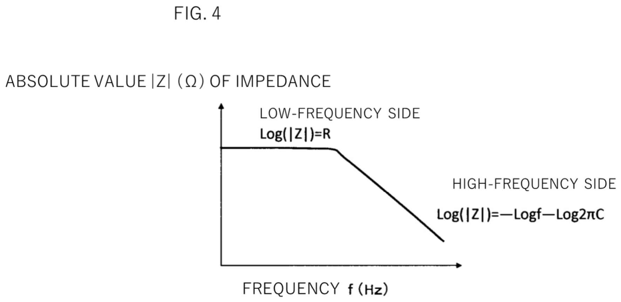

The meanings of Expressions (2) to (5) above will be described using FIG. 4. In FIG. 4, the vertical axis indicates a logarithm of the absolute value of the impedance, and the horizontal axis indicates a logarithm of the frequency of the measurement vibration voltage. FIG. 4 illustrates a behavior of the impedance expressed by Expression (2). First, the absolute value of the impedance satisfying Expression (2) decreases at a certain frequency if the frequency increases as described above. The inclination of the lowering behavior does not depend on the electric resistivity, the electrostatic capacity, and the like of the charging roller as indicated by Expression (5) in the double logarithmic plotting as in FIG. 4 and is a straight line with an inclination of -1.

When the impedance properties of an insulating charging roller are measured, a straight line with an inclination of

-1 is obtained, and the state where the inclination is -1 is thus presumed to be a state where the property that the motion of charge is stagnating on the high-frequency side has appeared in the impedance measurement of the charging roller. If motion of the charge on the high-frequency side stagnates, supply of the charge for discharge cannot follow the frequency of discharge. As a result, the timing at which discharge cannot be performed occurs, and it is presumed that discharge missing has occurred.

On the other hand, the charge supply is unlikely to stagnate on the high-frequency side in the charging roller with an inclination of impedance of -0.80 to -0.30 in a high-frequency region of $1.0 \times 10^5$ Hz to $1.0 \times 10^6$ Hz. As a result, charge supply is enabled for discharge on the high-frequency side on which stagnation of the charge is likely to occur. Since the charge supply can be performed abundantly, it is possible to suppress discharge missing and to improve the total amount of discharge. The range of the high-frequency region is considered to be a region where discharge missing is likely to occur since the discharge in the region is discharge in the region where the frequency is the highest among the frequencies of discharge generated by the charging roller. By the inclination showing a value within the above range that is greater than -1 in such a frequency range, it is possible to obtain an inclination that is greater than -1 in a high-frequency region that is lower than the frequency region as well, to suppress occurrence of discharge missing, and to uniformly perform discharge on the photosensitive drum.

Thus, it is possible to perform discharge and to provide charge even to the contamination on the photosensitive drum having passed through the cleaning blade. Since it is possible to provide charges with the same polarity as that in the charging process to the contamination charged to a polarity opposite to that in the charging process after the transfer process and to thereby suppress flying of the contamination due to electrostatic force.

In order to obtain the inclination of the impedance of -0.80 to -0.30, the base layer may have a matrix-domain structure. In addition, it is preferable that the volume resistivity of the matrix be high.

Method of Measuring Inclination of Impedance

The inclination of the impedance can be measured by the following method.

In the measurement of the impedance, in order to eliminate influences of the contact resistance between the charging roller and the measurement electrode, it is preferable to deposit a low-resistance thin film on the surface of the charging roller and to measure the impedance with two terminals using the thin film as an electrode and a conductive support as a ground electrode.

Examples of a method for forming the thin film include a method of forming an electrode such as metal vapor deposition, sputtering, application of a metal paste, and attachment of a metal tape. Among these, the platinum thin film is formed as a platinum electrode through vapor deposition in the present disclosure from the viewpoint of reducing the contact resistance with the charging roller.

In a case where the platinum electrode is formed on the surface of the charging roller, it is preferable to apply a mechanism capable of gripping the charging roller to a vacuum deposition apparatus in consideration of simplicity and uniformity of the thin film. For the charging roller having a cylindrical section, it is preferable to use a vacuum deposition apparatus further equipped with a rotation mechanism. For a charging roller constituted by a curved surface with a circular section or the like, for example, a charging roller with a columnar shape, it is difficult to connect the above-described platinum electrode as a measurement electrode and the impedance measurement apparatus, and the following method is preferably used.

Specifically, it is only necessary to wind a metal sheet without any gap after forming the platinum electrode with a width of about 10 mm to 20 mm in the longitudinal direction of the charging roller, to connect the metal sheet to the measurement electrode sticking out of the measurement apparatus, and to perform measurement. Accordingly, it is possible to suitably acquire an electrical signal from the conductive layer of the charging roller by the measurement apparatus and to perform the impedance measurement. The metal sheet may be any metal sheet with an electric resistance that is equivalent to that of a metal portion of a connection cable for the measurement apparatus for the measurement of the impedance, and for example, it is possible to use an aluminum foil, a metal tape, or the like can be used.

The impedance measurement apparatus may be any apparatus capable of measuring the impedance in the frequency range up to $1.0 \times 10^7$ Hz, such as an impedance analyzer, a network analyzer, or a spectrum analyzer. Among these, measurement is preferably performed by an impedance analyzer from an electric resistance region of the charging roller.

Impedance measurement conditions will be described. By using the impedance measurement apparatus, the impedance in the frequency region of $1.0 \times 10^{-2}$ to $1.0 \times 10^7$ Hz is measured. The measurement is performed in an environment at a temperature of 23°C and a relative humidity of 50%. In order to reduce measurement variations, five measurement points are provided per frequency digit. The five measurement points are positioned at equal intervals, for example, to prevent arbitrariness. Although it depends on the shape of the charging roller, the measurement points are provided at center parts of five divided parts in a case where the charging roller can be equally divided into the five parts.

The amplitude of the AC voltage is 1 V.

In regard to the measurement voltage, measurement may be performed while a DC voltage is applied in consideration of a shared voltage to be applied to the charging roller in the electrophotographic apparatus. Specifically, the measurement is suitably performed while the DC voltage and the vibration voltage of equal to or less than 10 V are applied in an imposed manner to quantify the properties of the charge transport and accumulation.

Next, a method of calculating the inclination of the impedance will be described. With respect to the measurement results obtained under the above-described conditions, absolute values of the impedance are plotted in a double-logarithmic graph with respect to a measurement frequency using spreadsheet software (for example, "Microsoft Excel (trade name)" (manufactured by Microsoft). It is only necessary to use the inclination of the absolute values of the impedance in the frequency region of $1.0 \times 10^5$ Hz to $1.0 \times 10^6$ Hz in the graph obtained by the double logarithmic plotting by using measurement points in the frequency region of $1.0 \times 10^5$ Hz to $1.0 \times 10^6$ Hz.

Specifically, it is only necessary to calculate an approximate straight line of a linear function by a least square method and to calculate the inclination for the plotting of the graph in the frequency range.

In the measurement of the inclination of the impedance in the charging roller with the columnar shape, it is only necessary to perform the measurement at five locations at the center parts in the regions obtained by equally dividing the longitudinal direction as an axial direction into five regions and to calculate an arithmetic mean of the inclination measurement values at the five locations.

Elastic Layer with Matrix-Domain Structure

The charging roller 2 is preferably a conductive roller including the base layer 22 with a matrix-domain structure. The matrix-domain structure is a structure having a matrix containing a first rubber crosslinked material and domains containing a second rubber crosslinked material and conductive particles dispersed in the matrix.

It is possible to adjust a resistance range to a desired range while reducing the amount of added conductive particles to the elastic layer by localizing the conductive particles in the elastic layer. Therefore, it is possible to reduce the amount of filler contained in rubber forming the matrix and to further increase the rebound resilience of the elastic layer. As a result, a stronger reaction force is applied to the region where the second protruding portions are present when the first protruding portions on the surface layer are pushed against the photosensitive drum, the region more significantly rises in an arch shape, and peeling-off of the contamination becomes more likely to occur.

Method of Forming Matrix-Domain Structure

A specific example of a way of forming the elastic layer 22 with the matrix-domain structure in the charging roller 2 will be described.

The configuration having the domains as a conductive phase and the matrix as an insulating phase can be obtained by a method of phase-separating or dispersing the conductive material and the insulating material, for example. Among these, the elastic layer (base layer) 22 preferably has a matrix-domain phase-separation structure obtained by phase separation of the matrix containing the first rubber and the conductive second rubber.

The charge is transported through the conductive domains, and the rebound resilience of the elastic layer can be further increased, by the conductive layer 22 having the matrix-domain structure. It is considered that the state where the charge is abundantly present in the conductive layer 22 can be realized by the charge stopping for a specific period of time at the interface between the conductive domains and the insulating matrix and being accumulated in the domains and by the conducting mechanism between domains being then achieved.

The elastic layer 22 with the matrix-domain structure in the charging roller 2 preferably satisfies the following components (i) and (ii). Hereinafter, the charging roller 2 will be described as an example.

Component (i) The volume resistivity of the matrix is greater than $1.0 \times 10^8$ $\Omega$·cm and is equal to or less than $1.0 \times 10^{17}$ $\Omega$·cm.

Component (ii) The volume resistivity of the domains is from $1.0 \times 10^1$ $\Omega$·cm to $1.0 \times 10^4$ $\Omega$·cm.

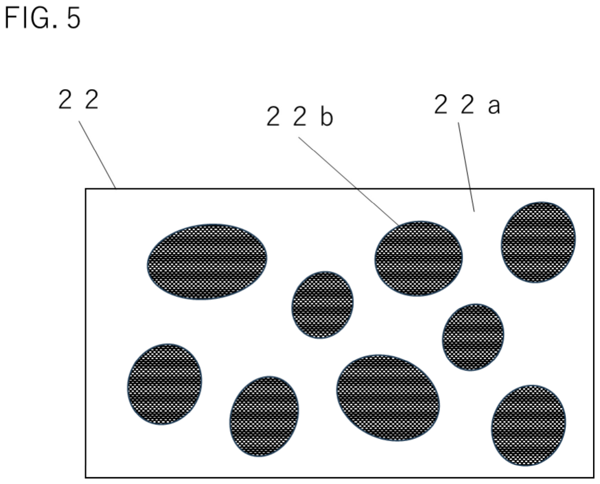

FIG. 5 is a schematic partial sectional view of the elastic layer 22 (illustrates a section that substantially perpendicularly intersects the rotational axis of the charging roller 2). The elastic layer 22 has a matrix-domain structure having a matrix 22a and domains 22b. The domains 22b contain conductive particles as an electron conducting agent.

Method of Measuring Volume Resistivity of Matrix

The volume resistivity of the matrix can be measured by a microprobe by obtaining the elastic layer 22 as a thin piece. Examples of a way of obtaining the thin piece include a sharp razor, a microtome, and a focused ion beam (FIB).

For production of the thin piece, it is necessary to eliminate influences of the domains and to measure the volume resistivity of only the matrix, and it is thus necessary to create a thin piece with a smaller film thickness than the inter-domain

distance measured in advance with a scanning electron microscope (SEM), a transmission electron microscope (TEM), or the like. Therefore, a way capable of producing a very thin sample like a microtome is preferably used as a way to obtain the thin piece.

For the volume resistivity measurement, locations of the matrix and the domains are specified after one side of the thin piece is grounded first. These locations can be specified by a way capable of measuring volume resistivity or hardness distribution of the matrix and the domains with a scanning probe microscope (SPM), an atomic force microscope (AFM), or the like. Then, a probe is brought into contact with the matrix, an arithmetic mean value of the ground current value of the ground current value for five seconds when 50 V DC voltage is applied for five seconds is measured, and the arithmetic mean value is divided by a voltage, thereby calculating an electric resistance value. Then, it is only necessary to convert the electric resistance value into volume resistivity using the film thickness of the thin piece. At this time, a way capable of measuring the shape of the thin film as well, such as an SPM or an AFM, is suitably used because it is possible to measure the film thickness of the thin film and to measure the volume resistivity.

Measurement of the volume resistivity of the matrix in conductive member (charging roller 2) with the columnar shape can be performed as follows. One thin piece sample is cut from each of regions obtained by dividing the elastic layer 22 into four parts in the circumferential direction and into five parts in the longitudinal direction (the rotational axis direction of the charging roller 2), and the volume resistivity can be measured by obtaining the above-described measurement values and calculating the arithmetic mean value of the volume resistivity from a total of twenty samples.

Volume Resistivity of Domains

The volume resistivity of the individual domains is smaller than the volume resistivity of the matrix. This is preferable because it becomes easier to limit charge transport paths to paths via the plurality of domains while suppressing unintended movement of charge by the matrix. The volume resistivity of the matrix is preferably greater than the volume resistivity of the domains by $10^5$ or more. The volume resistivity of the domains is preferably from $1.0 \times 10^1$ $\Omega\cdot$cm to $1.0 \times 10^4$ $\Omega\cdot$cm.

It is possible to more effectively limit the charge transport paths to paths via the plurality of domains while suppressing unintended movement of charge by the matrix by achieving a state where the volume resistivity of the domains is lower. It is possible to dramatically improve the amount of charge moving inside the domains and to thereby effectively limit the charge transport paths to paths via the domains, by lowering the volume resistivity of the domains to the above range.

The volume resistivity of the domains can be adjusted by using a conducting agent for the rubber component in the domains to set the conductivity to a desired value. The volume resistivity of the domains can be adjusted by appropriately selecting the type of the electron conducting agent and the amount of addition thereof. As the conducting agent used to control the volume resistivity of the domains to be from $1.0 \times 10^1$ $\Omega\cdot$cm to $1.0 \times 10^4$ $\Omega\cdot$cm, an electron conducting agent capable of greatly changing the volume resistivity from a high resistance to a low resistance depending on the amount of dispersion is preferably used.

Examples of the electron conducting agent to be blended in the domains include: oxides such as carbon black, graphite, titanium oxide, and tin oxide; a metal such as Cu and Ag; and particles with oxide or metal applied to the surface thereof to have conductivity. Two or more kinds of these conducting agents may be blended in appropriate amounts and used as needed.

Among the above-mentioned electron conducting agents, it is preferable to use conductive carbon black which has a high affinity with rubber and which facilitates control of the distance between electron conducting agents. The type of carbon black to be blended in the domains is not particularly limited. Specific examples include gas furnace black, oil furnace black, thermal black, lamp black, acetylene black, Ketjen black, and the like.

As needed, a filler, a processing aid, a crosslinking aid, a crosslinking accelerator, an anti-aging agent, a crosslinking promoter, a crosslinking retarder, a softener, a dispersant, a colorant, and the like that are typically used as agents to be blended in rubber may be added to the rubber composition for the domains within a range in which the effects of the present disclosure are not hindered.

Method of Measuring Volume Resistivity of Domains

The volume resistivity of the domains can be measured in the same manner as in the above-described method for measuring the volume resistivity of the matrix except that the measurement location is changed to a location corresponding to each domain and the applied voltage when measuring the current value is changed to 1 V.

Method of Manufacturing Charging Roller

The base layer (elastic layer) 22 can be formed by a method including processes (i) to (iv) below, for example.

Step (i): A process of preparing a rubber mixture for domain formation containing carbon black and second rubber (hereinafter, referred to as "CMB")
Step (ii): A process of preparing a rubber mixture for matrix formation containing a first rubber (hereinafter, referred to as "MRC")
Step (iii): A process of kneading CMB and MRC to prepare a mixture of CMB and MRC with a matrix-domain structure.
Step (iv): The mixture of CMB and MRC prepared in step (iii) is used as it is, or a vulcanizing agent is added thereto as needed, thereby obtaining an unvulcanized rubber composition for forming the base layer. A process of forming the layer of the unvulcanized rubber composition for forming the base layer directly on the conductive support 21 or via another layer, curing the layer of the rubber composition, and forming the elastic layer 22.

Also, the component (i) and the component (ii) can be controlled by selecting a material to be used in each of the above processes and adjusting manufacturing conditions, for example. Description will be given below.
First, the volume resistivity of the matrix is determined by the composition of MRC in regard to the component (i). Examples of the first rubber used in MRC include at least one kind with low conductivity from among natural rubber, butadiene rubber, butyl rubber, acrylonitrile butadiene rubber, urethane rubber, silicone rubber, fluororubber, isoprene rubber, chloroprene rubber, styrene-butadiene rubber, ethylene-propylene rubber, and polynorbornene rubber.
To MRC, a filler, a processing aid, crosslinking agent, a crosslinking aid, a crosslinking promoter, a crosslinking promotion aid, a crosslinking retarder, an anti-aging agent, a softener, a dispersant, and a colorant may be added as needed on the assumption that it is possible to adjust the volume resistivity of the matrix within the above-mentioned range. On the other hand, it is preferable that MRC do not contain an electron conducting agent such as carbon black to adjust the volume resistivity of the matrix within the above-mentioned range.
In regard to the component (ii), the volume resistivity of the domains can be adjusted by the amount of electron conducting agent in CBM. For example, a case where conductive carbon black with a DBP oil absorption amount of from 40 $cm^3$/100 g to 170 $cm^3$/100 g is used is exemplified. In this case, the component (ii) can be achieved by preparing CMB by including from 40% by mass to 200% by mass of conductive carbon black with reference to the total mass of CMB.
Here, specific examples of the second rubber that may be used in CMB include natural rubber (NR), isoprene rubber (IR), butadiene rubber (BR), styrene-butadiene rubber (SBR), butyl rubber (IIR), ethylene-propylene rubber (EPM, EPDM), chloroprene rubber (CR), nitrile rubber (NBR), hydrogenated nitrile rubber (H-NBR), silicone rubber, and urethane rubber (U). At least one kind thereof can be used.

Method of Confirming Matrix-Domain Structure

The presence of the matrix-domain structure in the elastic layer 22 can be confirmed by creating a thin piece from the elastic layer 22 and observing in detail a fractured surface formed in the thin piece.
Examples of a way of obtaining the thin piece include a sharp razor, a microtome, and an FIB. In order to conduct more accurate observation of the matrix-domain structure, a pretreatment such as dyeing treatment or deposition treatment, from which contract between the domains as a conductive phase and the matrix as an insulating phase can be suitably obtained may be applied to thin piece for observation.
For the thin piece, from which the fracture section has been formed, and on which the pretreatment has been performed as needed, the fractured surface is observed with a laser microscope, a scanning electron microscope (SEM), a transmission electron microscope (TEM), or the like to confirm the presence of the matrix-domain structure. As a method by which it is possible to simply and accurately confirm a sea-island structure (matrix-domain structure), observation with a scanning electron microscope (SEM) is preferably performed.
A thin piece of the elastic layer 22 is obtained by the method as described above, the surface of the thin piece is observed at 1000 times to 10000 times, and an image is obtained. Thereafter, image processing like ImageProPlus (manufactured by Media Cybernetics) is used to obtain 8-bit gray scales, and 256-gradation monochrome image is obtained. Next, white and black in the image are inverted to obtain white domains in the fractured surface, and binarization is performed to acquire an analysis image. It is only necessary to determine the presence of the matrix-domain structure from the analysis image after being subjected to image processing into a state where the domains and the matrix are distinguished by binarization.
In a case where the analysis image includes a structure in which the plurality of domains 22b are present in an isolated state in the matrix 22a as in FIG. 5, it is possible to confirm the presence of the matrix-domain structure in the elastic layer 22. It is only necessary for the domain isolated state to be a state in which each domain is disposed with no connection with other domains, the matrix establishes communication in the image, and the domains are disconnected by the matrix.

Process Cartridge

The present disclosure provides a process cartridge that is attachable to and detachable from a main body of an

electrophotographic image forming apparatus,

in which the process cartridge includes: an electrophotographic photosensitive member; and a charging roller that is disposed to be able to charge the electrophotographic photosensitive member, and
the charging roller is the above-described charging roller.

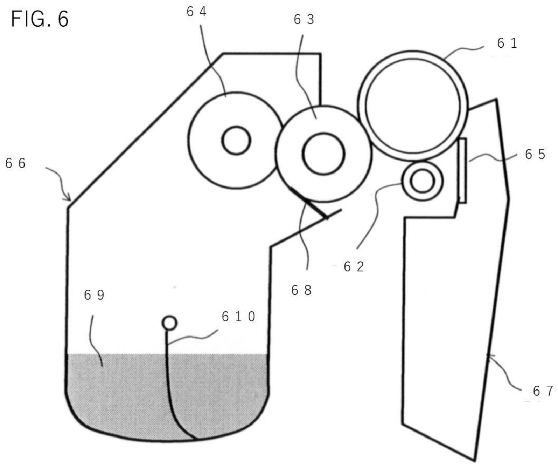

FIG. 6 is an overview sectional view of the electrophotographic process cartridge including the electrophotographic member according to the present disclosure as a charging roller. The process cartridge is configured such that a developing device and a charging device are integrated and are attachable to and detachable from the main body of the electrophotographic apparatus. The developing device is obtained by integrating at least a developing roller 63 and a toner container 66 and may include, as needed, a toner supply roller 64, a toner 69, a developing blade 68, and a stirring blade 610.
The charging device is obtained by integrating at least a photosensitive drum 61, a cleaning blade 65, and a charging roller 62 and may include a waste toner container 67. The charging roller 62, the developing roller 63, the toner supply roller 64, and the developing blade 68 are adapted such that a voltage is applied to each of them.

Electrophotographic Image Forming Apparatus

The present disclosure provides an electrophotographic image forming apparatus, in which the electrophotographic image forming apparatus includes: an electrophotographic photosensitive member and a charging roller that is disposed to be able to charge the electrophotographic photosensitive member, and
the charging roller is the above-described charging roller.

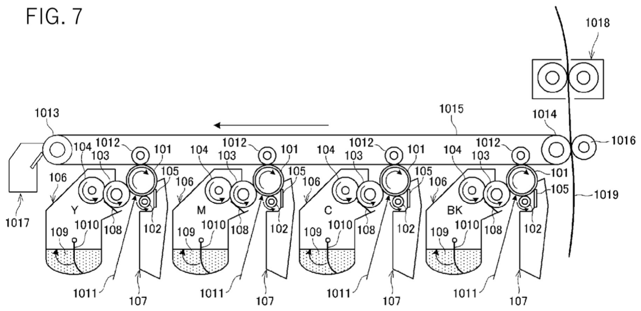

FIG. 7 is an overview configuration diagram of the electrophotographic image forming apparatus including the charging roller. The electrophotographic image forming apparatus is a color electrophotographic apparatus to which the process cartridge is detachably attached. In each process cartridge, a toner of each of colors, namely black BK, magenta M, yellow Y, and cyan C is used.
The photosensitive drum 101 rotates in the arrow direction and is uniformly charged by the charging roller 102 to which a voltage is applied from a charging bias power source, and an electrostatic latent image is formed on the surface thereof with exposure light 1011. On the other hand, the toner 109 accommodated in the toner container 106 is supplied to the toner supply roller 104 by a stirring blade 1010 and is then transported onto the developing roller 103.
The surface of the developing roller 103 is uniformly coated with the toner 109 by the developing blade 108 that is disposed to be in contact with the developing roller 103, and charge is given to the toner 109 by frictional charging. The electrostatic latent image is developed by applying the toner 109 transported by the developing roller 103 disposed to be in contact with the photosensitive drum 101 and is visualized as a toner image.
The visualized toner image on the photosensitive drum is supported on a tension roller 1013 and an intermediate transfer belt drive roller 1014 by a primary transfer roller 1012, to which a voltage is applied by a primary transfer bias power source, and is then transferred onto a driven intermediate transfer belt 1015. The toner image of each color is successively superimposed, and a color image is formed on the intermediate transfer belt.
A transfer material 1019 is fed to the apparatus by a paper supply roller and is then transported between the intermediate transfer belt 1015 and a secondary transfer roller 1016. A voltage is applied to the secondary transfer roller 1016 from a secondary transfer bias power source, and the color image on the intermediate transfer belt 1015 is transferred onto the transfer material 1019. The transfer material 1019 with the color image transferred thereon is subjected to fixation processing by a fixer 1018 and is discharged to the outside of the apparatus, and the printing operation is then ended.
On the other hand, the toner remaining on the photosensitive drum without being transferred is scraped off by the cleaning blade 105 and is accommodated in a waste toner accommodation container 107, and the cleaned photosensitive drum 101 repeats the above-described processes. The toner remaining on the primary transfer belt without being transferred is also scraped off by a cleaning device 1017.
Although the color electrophotographic apparatus has been described as an example, the process cartridge uses only a black toner in a monochrome electrophotographic apparatus (not illustrated). A monochrome image is formed directly on a transfer material by the process cartridge and the primary transfer roller (without the secondary transfer roller) without intervention of the intermediate transfer belt. Thereafter, fixation is performed by the fixer, the sheet is discharged to the outside of the apparatus, and the printing operation is then ended.

EXAMPLES

Although the present disclosure will be described below on the basis of examples, the present disclosure is not limited thereto.

Hereinafter, examples and comparative examples will be described. Charging rollers in the examples and the comparative examples were produced in the following procedure.

Adjustment of Unvulcanized Rubber Composition for Forming Base Layer Used to Form Base Layer Roller 1

1-1. Preparation of Carbon Master Batch (CMB) for Domain Formation

Materials of the types and the amounts of blending shown in Table 1 were mixed by a six-liter pressurizing kneader (trade name: TD6-15MDX, manufactured by Toshin CO. Ltd.), thereby obtaining a rubber mixture CMB for domain formation. The mixing conditions of a filling rate of 70 vol%, a number of blade revolutions of 30 rpm, and a temperature in the kneader of 100°C for 16 minutes were set.

[Table 1]

| | Raw material name | Amount of blending (part by mass) |
|---|---|---|
| Second rubber | NBR (Trade name: JSR NBR N230SV, manufactured by JSR) | 100 |
| Conductive particles | Carbon black (Trade name: Tokablack #5500, manufactured by Tokai Carbon) | 80 |
| Vulcanization promotor | Zinc oxide (Trade name: Zinc White, manufactured by Sakai Chemical Industry) | 5 |
| Processing aid | Zinc stearate (Trade name: SZ-2000, manufactured by Sakai Chemical Industry) | 2 |

1-2. Preparation of Rubber Mixture (MRC) for Matrix Formation

The materials of the types and the amounts of blending shown in Table 2 were mixed by a six-liter pressurizing kneader (trade name: TD6-15MDX, manufactured by Toshin CO. Ltd.), thereby obtaining a rubber mixture for matrix formation. The mixing conditions of a filling rate of 70 vol%, a number of blade revolutions of 30 rpm, and a temperature in the kneader of 100°C for 16 minutes were set.

[Table 2]

| | Raw material name | Amount of blending (part by mass) |
|---|---|---|
| First rubber | SBR (Trade name: Tufdene 1000, manufactured by Asahi Kasei Corporation) | 100 |
| Filler | Calcium carbonate (Trade name: Nanox #30, manufactured by Maruo Calcium) | 40 |
| Vulcanization promotor | Zinc oxide (Trade name: Zinc White, manufactured by Sakai Chemical Industry) | 5 |
| Processing aid | Zinc stearate (Trade name: SZ-2000, manufactured by Sakai Chemical Industry) | 2 |

1-3. Adjustment of Unvulcanized Rubber Mixture for Forming Base Layer

CMB and MRC obtained as described above were mixed in the amounts of blending shown in Table 3 using a six-liter pressurizing kneader (trade name: TD6-15MDX, manufactured by Toshin CO. Ltd.). The mixing conditions of a filling amount of 70 vol%, the number of blade revolutions of 30 rpm, and a temperature in the kneader of 100°C for 16 minutes were set.

[Table 3]

| | Raw material name | Amount of blending (part by mass) |
|---|---|---|
| Domain raw material | Rubber mixture for domain formation (CMB) | 28 |
| Matrix raw material | Rubber mixture for matrix formation (MRC) | 72 |

1-4. Adjustment of Unvulcanized Rubber Composition for Forming Base Layer

Next, a vulcanizing agent and a vulcanization accelerator shown in Table 4 were added in the amounts of blending shown in Table 4 to 100 parts by mass of the mixture of CMB and MRC, and the mixture was mixed using an open roll, thereby preparing an unvulcanized rubber composition for forming the base layer. The mixer used was an open roll with a roll diameter of 12 inches. As mixing conditions, left and right switching was performed 20 times in total with the number of front roll revolutions of 10 rpm, with the number of rear roll revolutions of 8 rpm, and with the roll gap of 2 mm, and tight milling was then performed 10 times with the roll gap of 1.0 mm.

[Table 4]

| | Raw material name | Amount of blending (part by mass) |
|---|---|---|
| Vulcanizing agent | Sulfur (Trade name: SULFAX PMC, sulfur content of 97.5%, manufactured by Tsurumi Chemical Industry) | 3 |
| Vulcanization accelerator 1 | Tetrabenzylthiuram disulfide (Trade name: Sansera-TBzTD, manufactured by Sanshin Chemical Industry) | 1 |
| Vulcanization accelerator 2 | N-t-butyl-2-benzothiazolylsulfenamide (Trade name: SANTOCRE-TBSI, manufactured by FLEXSYS) | 0.5 |

1-5. Formation of Base Layer

As a support, a core metal with a total length of 252 mm and an outer diameter of 6 mm obtained by performing electroless nickel plating treatment on a surface of free cutting steel was prepared. The core metal was used as a support which was a conductive shaft core. Then, using a roll coater, an adhesive (trade name: Metalock U-20, manufactured by Toyokagaku Kenkyusho Co., Ltd.) was applied over the entire circumference of the core metal in a range of 230 mm except for 11 mm at each of the both end portions. In the examples, the core metal with the adhesive applied thereto was used as a conductive support.

Next, a die with an inner diameter of 10.0 mm was attached to a tip of a crosshead extruder equipped with a conductive support supply mechanism and an unvulcanized rubber roller, and the temperature of the extruder and the crosshead was adjusted to 100°C, and the conductive support transport speed was adjusted to 60 mm/sec. The unvulcanized rubber composition for forming the base layer was supplied from the extruder under these conditions, and the outer circumferential portion of the conductive support was covered with the unvulcanized rubber composition for forming the base layer inside the crosshead, thereby obtaining an unvulcanized rubber roller.

Next, the unvulcanized rubber roller was put into a hot-air vulcanizing furnace at 170°C and was heated for 60 minutes to vulcanize the unvulcanized rubber composition, thereby obtaining a conductive roller with a conductive elastic layer as a base layer formed on the outer circumferential portion of the conductive support. Thereafter, both end portions of the base layer were cut by 10 mm such that the length of the base layer in the longitudinal direction became 232 mm.

1-6. Polishing of Base Layer

Next, the surface of the conductive roller was polished under polishing conditions described in the following polishing conditions 1, thereby obtaining a base layer roller 1 with a crown shape in which the diameter at the center was 8.5 mm and each diameter at the position of 90 mm from the center to both end portions was 8.4 mm.

Polishing Conditions 1

A cylindrical grindstone (manufactured by Teiken Co., Ltd.) with a diameter of 305 mm and a length of 235 mm was prepared as the grindstone. The type, the particle size, the bonding degree, the binder, and the material of structure (abrasive grain rate) abrasive grains were as follows.

- Abrasive grain material: GC (green silicon carbide), (JIS R6111-2002)
- Grain size of abrasive grains: #80 (average particle diameter: 177 μm, JIS B4130)
- Bonding degree of abrasive grains: HH (JIS R6210)
- Binder: V4PO (vitrified)

- Structure of abrasive grains (abrasive grain rate): 23 (content of abrasive grains: 16%, JIS R6242)

As polishing conditions, the number of revolutions of the grindstone of 2100 rpm and the number of revolutions of the conductive member of 250 rpm were set, the grindstone was brought into contact with the outer circumferential surface of the conductive member at an entry speed of 20 mm/second, and the grind stone was then caused to enter the conductive member by 0.24 mm in a rough grinding process.

As a precise polishing process, the entry speed was changed to 0.5 mm/second, the grindstone was caused to enter by 0.01 mm and was then released from the conductive member, and the polishing was completed.

As a polishing method, an upper cut method was adopted in which the grinding stone and the conductive member were rotated in the same direction.

1-7. Production of Base Layer Rollers 2, 4, and 6

Base layers rollers 2, 4 and 6 were produced in the same manner as in [1-5 and 1-6] described above except that the rubber mixture CMB for domain formation, the rubber mixture MRC for matrix formation, and the vulcanizing agent were changed to those in Table 5.

[Table 5]

| | Rubber mixture CMB for domain formation | | | | | Rubber mixture MRC for matrix formation | | | | Unvulcanized rubber composition | | Vulcanizing agent | Vulcanizing agent | |
|---|---|---|---|---|---|---|---|---|---|---|---|---|---|---|
| | Raw material rubber type | | | | Conductive particle | Raw material rubber type | | | | CMB | MRC | | Vulcanization accelerator 1 | Vulcanization accelerator 2 |
| Base layer roller No. | Material abbreviation | | SP value | Mooney viscosity | Part | Material abbreviation | | SP value | Mooney viscosity | Part | Part | Part | Part | Part |
| 1 | NBR | N230SV | 19.2 | 32 | 80 | SBR | T1000 | 16.8 | 45 | 28 | 72 | 3 | 1 | 0.5 |
| 2 | NBR | N230SV | 19.2 | 32 | 50 | - | - | - | - | 100 | - | 3 | 1 | 0.5 |
| 4 | SBR | T1000 | 16.8 | 45 | 80 | NBR | N230SV | 19.2 | 32 | 20 | 80 | 3 | 1 | 0.5 |
| 6 | NBR | N230SV | 19.2 | 32 | 80 | SBR | T1000 | 16.8 | 45 | 28 | 72 | 1.5 | 1 | 0.5 |

The unit of the SP value was $(J/cm^3)^{0.5}$. Mooney viscosity was obtained by measuring the Mooney viscosity $ML_{(1+4)}$ based on JIS K6300-1:2013 at the rubber temperature during kneading.

1-8. Production of Base Layer Roller 3

A base layer roller 3 was produced in the same manner as the base layer roller 1 except that the number of blade revolutions was set to 20 rpm in 1-3. Adjustment of Unvulcanized Rubber Mixture for Forming Base Layer.

1-9. Production of Base Layer Roller 5

A base layer roller 5 was produced in the same manner as the base layer roller 1 except that 15 parts by mass of PMMA particles (trade name: Gantz Pearl GM-2801, volume average particle diameter of 28 μm, manufactured by Aica Kogyo Co., Ltd.) as first resin particles and 30 parts by mass of urethane particles (trade name: Art Pearl C-600 transparent, volume average particle diameter of 10.0 μm, manufactured by Negami Chemical Industrial Co., Ltd.) as second resin particles were added in 1-4. Adjustment of Unvulcanized Rubber Composition for Forming Base Layer.

2. Adjustment of Surface Layer Coating Solution

2-1. Adjustment of Isocyanate Group-Terminated Prepolymer

A surface layer coating solution for forming the surface layer 1 was prepared as follows. In a nitrogen atmosphere, 100 parts by mass of polyether polyol (trade name: PTMG 3000 manufactured by Mitsubishi Chemical Group Corporation) was gradually added dropwise to 30 parts by mass of polymeric MDI (trade name: Millionate MR200, manufactured by Tosoh Corporation) in a reaction vessel while the temperature in the reaction vessel was maintained at 65°C. After the end of the dropwise addition, the reaction was performed at a temperature of 65°C for 2 hours. The resulting reaction mixture was cooled to room temperature, thereby obtaining isocyanate group-terminated prepolymer B-1 in which the content of isocyanate group was 4.3%.

2-2. Adjustment of Surface Layer Coating Solution S-1

42 parts by mass of polyether polyol (A-1) (trade name: PTMG 2000, manufactured by Mitsubishi Chemical Group Corporation) and 25 parts by mass of carbon black (C-1) (trade name: MA230, manufactured by Mitsubishi Chemical Group Corporation, number average particle diameter of 30 nm) with respect to 58 parts by mass of isocyanate group-terminated prepolymer B-1 were dissolved in methyl ethyl ketone (MEK) to adjust the solid content to 25% by mass. A mixture solution 1 was produced as described above.

270 g of the mixture solution 1 and 200 g of glass beads with an average particle diameter of 0.8 mm were placed in a glass bottle having an internal volume of 450 mL, and were dispersed for 12 hours using a paint shaker disperser. After the dispersion, 5 parts by mass of urethane particles (D-1) with an average particle diameter of 22.0 μm (trade name: Art Pearl CE-300, manufactured by Negami Chemical Industrial Co., Ltd.) and 10 parts by mass of urethane particles (E-1) (trade name: Art Pearl C-800, manufactured by Negami Chemical Industrial Co., Ltd.) classified using a wind force classifier (trade name: EJ-L-3 type, manufactured by Nittetsu Mining Co., Ltd.) were added thereto.

The volume average particle diameter (median diameter) of the classified urethane particles (E-1) was measured by a particle size distribution measuring instrument (apparatus name: Coulter Multisizer II, manufactured by Beckman Coulter, Inc.), and the result was 5.0 μm. Thereafter, the dispersion was further carried out for 15 minutes, and the glass beads were removed, thereby obtaining a surface layer coating solution S-1.

2-3. Adjustment of Surface Layer Coating Solutions S-2 to S-40

Surface layer coating solutions S-2 to S-40 were prepared in the same manner as the surface layer coating solution S-1 except that the formulations were changed as described in Table 5-1. Note that the details of raw materials by symbols in the section of "Type" in Table 5-1 are shown in Tables 5-1 and 5-2.

It should be noted that, in Tables 5-1 and 5-2, the adjustment method of isocyanate (isocyanate group-terminated prepolymer) "B-1" is as described above. The adjustment methods for isocyanate "B-2" and urethane particles D-3, 4, 5, 8, and 9 and E-1, 5, 6, 8, and 11 are described after Table 5-2.

[Table 5-1]

| Surface layer coating solution No. | Polyol | | Isocyanate | | Conducting agent | | First resin particle | | Second resin particle | | Third resin particle | |
|---|---|---|---|---|---|---|---|---|---|---|---|---|
| | Type | Part by mass | Type | Part by mass | Type | Part by mass | Type | Part by mass | Type | Part by mass | Type | Part by mass |
| S-1 | A-1 | 42 | B-1 | 58 | C-1 | 25 | D-1 | 5 | E-1 | 10 | - | - |
| S-2 | A-1 | 42 | B-1 | 58 | C-1 | 25 | D-1 | 5 | E-2 | 10 | - | - |
| S-3 | A-1 | 42 | B-1 | 58 | C-1 | 25 | D-1 | 5 | E-3 | 10 | - | - |
| S-4 | A-1 | 42 | B-1 | 58 | C-1 | 25 | D-1 | 5 | E-4 | 10 | - | - |
| S-5 | A-1 | 42 | B-1 | 58 | C-1 | 25 | D-2 | 5 | E-1 | 10 | - | - |
| S-6 | A-1 | 42 | B-1 | 58 | C-1 | 25 | D-3 | 5 | E-1 | 10 | - | - |
| S-7 | A-1 | 42 | B-1 | 58 | C-1 | 25 | D-10 | 5 | E-1 | 10 | - | - |
| S-8 | A-1 | 42 | B-1 | 58 | C-1 | 25 | D-1 | 2 | E-1 | 10 | - | - |
| S-9 | A-1 | 42 | B-1 | 58 | C-1 | 25 | D-1 | 3 | E-1 | 10 | - | - |
| S-10 | A-1 | 42 | B-1 | 58 | C-1 | 25 | D-1 | 7 | E-1 | 10 | - | - |
| S-11 | A-1 | 42 | B-1 | 58 | C-1 | 25 | D-1 | 10 | E-1 | 10 | - | - |
| S-12 | A-1 | 42 | B-1 | 58 | C-1 | 25 | D-4 | 5 | E-1 | 10 | - | - |
| S-13 | A-1 | 42 | B-1 | 58 | C-1 | 25 | D-5 | 5 | E-1 | 10 | - | - |
| S-14 | A-1 | 42 | B-1 | 58 | C-1 | 25 | D-1 | 5 | E-1 | 1 | - | - |
| S-15 | A-1 | 42 | B-1 | 58 | C-1 | 25 | D-1 | 5 | E-1 | 20 | - | - |
| S-16 | A-1 | 42 | B-1 | 58 | C-1 | 25 | D-1 | 5 | E-1 | 50 | - | - |
| S-17 | A-1 | 42 | B-1 | 58 | C-1 | 25 | D-1 | 5 | E-5 | 10 | - | - |
| S-18 | A-1 | 42 | B-1 | 58 | C-1 | 25 | D-1 | 5 | E-6 | 10 | - | - |
| S-19 | A-2 | 42 | B-2 | 58 | C-1 | 25 | D-1 | 5 | E-1 | 10 | - | - |
| S-20 | A-3 | 65 | B-1 | 35 | C-1 | 25 | D-1 | 5 | E-1 | 10 | - | - |
| S-21 | A-4 | 6 | B-1 | 94 | C-1 | 25 | D-1 | 5 | E-1 | 10 | - | - |
| S-22 | A-3 | 65 | B-1 | 35 | C-1 | 20 | D-1 | 5 | E-1 | 10 | - | - |
| S-23 | A-1 | 42 | B-1 | 58 | C-1 | 25 | D-1 | 5 | E-1 | 10 | D-2 | 10 |
| S-24 | A-1 | 42 | B-1 | 58 | C-1 | 25 | D-6 | 5 | E-1 | 10 | - | - |
| S-25 | A-1 | 42 | B-1 | 58 | C-1 | 25 | - | - | - | - | - | - |
| S-26 | Nylon | | | | C-1 | 25 | D-7 | 10 | E-7 | 10 | - | - |
| S-27 | A-1 | 42 | B-1 | 58 | C-1 | 25 | D-1 | 15 | E-1 | 10 | - | - |
| S-28 | A-1 | 42 | B-1 | 58 | C-1 | 25 | D-1 | 1 | E-1 | 10 | - | - |
| S-29 | A-1 | 42 | B-1 | 58 | C-1 | 25 | - | - | E-1 | 10 | - | - |
| S-30 | A-1 | 42 | B-1 | 58 | C-1 | 25 | D-8 | 5 | E-1 | 10 | - | - |
| S-31 | A-1 | 42 | B-1 | 58 | C-1 | 25 | D-2 | 3 | E-1 | 10 | - | - |
| S-32 | A-1 | 42 | B-1 | 58 | C-1 | 25 | D-9 | 5 | E-1 | 10 | - | - |
| S-33 | A-1 | 42 | B-1 | 58 | C-1 | 25 | D-6 | 5 | E-1 | 10 | - | - |
| S-34 | A-1 | 42 | B-1 | 58 | C-1 | 25 | D-1 | 5 | E-8 | 10 | - | - |
| S-35 | A-1 | 42 | B-1 | 58 | C-1 | 25 | D-1 | 5 | E-9 | 10 | - | - |
| S-36 | A-1 | 42 | B-1 | 58 | C-1 | 25 | D-1 | 5 | - | - | - | - |

(continued)

| Surface layer coating solution No. | Polyol | | Isocyanate | | Conducting agent | | First resin particle | | Second resin particle | | Third resin particle | |
|---|---|---|---|---|---|---|---|---|---|---|---|---|
| | Type | Part by mass | Type | Part by mass | Type | Part by mass | Type | Part by mass | Type | Part by mass | Type | Part by mass |
| S-37 | A-1 | 42 | B-1 | 58 | C-1 | 25 | D-1 | 5 | E-1 | 1 | - | - |
| S-38 | A-1 | 42 | B-1 | 58 | C-1 | 25 | D-1 | 5 | E-1 | 80 | - | - |
| S-39 | A-3 | 65 | B-1 | 35 | C-1 | 25 | D-1 | 5 | E-10 | 10 | - | - |
| S-40 | A-1 | 42 | B-1 | 58 | C-1 | 25 | D-1 | 5 | E-11 | 10 | - | - |

[Table 5-2]

| | Type | Compound name |
|---|---|---|
| Polyol | A-1 | Polyether polyol (Hydroxyl group value: 56.1 mgKOH/g, trade name: PTMG2000, manufactured by Mitsubishi Chemical Group Corporation) |
| | A-2 | Polycarbonate polyol (Hydroxyl group value: 55.7 mgKOH/g, trade name: Duranol T5652, manufactured by Asahi Kasei Corporation) |
| | A-3 | Polyether polyol (Hydroxyl group value: 37.0 mgKOH/g, trade name: PTMG3000, manufactured by Mitsubishi Chemical Group Corporation) |
| | A-4 | Amine-based polyol (Hydroxyl group value: 701 mgKOH/g, trade name: NP-400, manufactured by Sanyo Chemical Industries) |
| Isocyanate | B-1 | Polyether-based polyol (NCO content: 4.3%, trade name: PTMG3000, manufactured by Mitsubishi Chemical Group Corporation) /Polymeric MDI (trade name: Millionate MR200, manufactured by Tosoh Corporation) |
| | B-2 | Polycarbonate-based polyol (NCO content: 4.3%, trade name: Duranol T5652, manufactured by Asahi Kasei Corporation) /Polymeric MDI (trade name: Millionate MR200, manufactured by Tosoh Corporation) |
| Conducting agent | C-1 | Carbon black (Trade name: MA100, average primary particle diameter of 24 nm, manufactured by Mitsubishi Chemical Group Corporation) |

[Table 5-3]

| | Type | Compound Name |
|---|---|---|
| First resin particle | D-1 | Urethane particle (Trade name: Art Pearl CE300 transparent, average particle diameter of 22.0 μm, manufactured by Negami Chemical Industrial Co., Ltd) |
| | D-2 | Urethane particle (Trade name: Art Pearl CE400 transparent, average particle diameter of 15.0 μm, manufactured by Negami Chemical Industrial Co., Ltd) |
| | D-3 | Urethane particle (classified product) (Trade name: Art Pearl CE300 transparent, average particle diameter of 30.0 μm, manufactured by Negami Chemical Industrial Co., Ltd) |
| | D-4 | Urethane particle (A-4×8-1, average particle diameter of 22.0 μm) |
| | D-5 | Urethane particle (classified product) (Trade name: Art Pearl U400 transparent, average particle diameter of 22.0 μm, manufactured by Negami Chemical Industrial Co., Ltd) |
| | D-6 | PMMA particle (Trade name: Gantz Pearl GM-2001, average particle diameter of 20.0 μm, manufactured by Aica Kogyo Co., Ltd.) |
| | D-7 | Nylon particle (Trade name: Orgasol series, average particle diameter of 20.0 μm, manufactured by Arkema) |

(continued)

| | Type | Compound Name |
|---|---|---|
| | D-8 | Urethane particle (classified product) (Trade name: Art Pearl CE300 transparent, average particle diameter of 40.0 μm, manufactured by Negami Chemical Industrial Co., Ltd) |
| | D-9 | Urethane particle (classified product) (Trade name: Art Pearl JB400 transparent, average particle diameter of 22.0 μm, manufactured by Negami Chemical Industrial Co., Ltd) |
| | D-10 | Urethane particle (classified product) (Trade name: Art Pearl CE300 transparent, average particle diameter of 18.0 μm, manufactured by Negami Chemical Industrial Co., Ltd) |
| Second resin particle | E-1 | Urethane particle (classified product) (Trade name: Art Pearl C800 transparent, average particle diameter of 5.0 μm, manufactured by Negami Chemical Industrial Co., Ltd) |
| | E-2 | Urethane particle (Trade name: Art Pearl C800 transparent, average particle diameter of 8.0 μm, manufactured by Negami Chemical Industrial Co., Ltd) |
| | E-3 | Urethane particle (Trade name: Art Pearl C1000 transparent, average particle diameter of 3.0 μm, manufactured by Negami Chemical Industrial Co., Ltd) |
| | E-4 | Urethane particle (Trade name: Art Pearl C600 transparent, average particle diameter of 10.0 μm, manufactured by Negami Chemical Industrial Co., Ltd) |
| | E-5 | Urethane particle (classified product) (Trade name: Art Pearl JB800 transparent, average particle diameter of 5.0 μm, manufactured by Negami Chemical Industrial Co., Ltd) |
| | E-6 | Urethane particle (A×B-2, average particle diameter of 5.0 μm) |
| | E-7 | Nylon particle (Trade name: Orgasol series, average particle diameter of 10.0 μm, manufactured by Arkema) |
| | E-8 | Urethane particle (classified product) (Trade name: Art Pearl C1000 transparent, average particle diameter of 1.0 μm, manufactured by Negami Chemical Industrial Co., Ltd) |
| | E-9 | Urethane particle (classified product) (Trade name: Art Pearl C400 transparent, average particle diameter of 12.0 μm, manufactured by Negami Chemical Industrial Co., Ltd) |
| | E-10 | Urethane particle (Trade name: Art Pearl JB800 transparent, average particle diameter of 8.0 μm, manufactured by Negami Chemical Industrial Co., Ltd) |
| | E-11 | Urethane particle (classified product) (Trade name: Art Pearl CE400 transparent, average particle diameter of 5.0 μm, manufactured by Negami Chemical Industrial Co., Ltd) |

In the tables, the average particle diameters indicate the volume average particle diameters.

2-4. Manufacturing of Isocyanate Group-Terminated Isocyanate Prepolymer B-2

In a nitrogen atmosphere, 100 parts by mass of polycarbonatepolyol (trade name: Duranol T5652, manufactured by Asahi Kasei Corporation) was gradually added dropwise to 33 parts by mass of polymeric MDI (trade name: Millionate MR200, manufactured by Tosoh Corporation) in a reaction vessel. At this time, the temperature in the reaction vessel was maintained at 65°C. After the dropwise addition ended, the reaction was carried out at 65°C for 2 hours. The resulting reaction mixture was cooled to room temperature, thereby obtaining isocyanate group-terminated prepolymer B-2 in which the content of isocyanate group was 4.3% by mass.

2-5. Manufacturing of Urethane Particles D-3, D-8, and D-10

Urethane particles D-1 (trade name: Art Pearl CE300 transparent, volume average particle diameter of 22.0 μm, manufactured by Negami Chemical Industrial Co., Ltd.) were classified using a wind force classifier (trade name: EJ-L-3 type, manufactured by Nittetsu Mining Co., Ltd.). The volume average particle diameter (median diameter) of the urethane particles was measured by a particle size distribution measuring instrument (trade name: Coulter Multisizer II, manufactured by Beckman Coulter, Inc.), and the result was 30.0 μm. This was defined as urethane particles D-3.

Furthermore, urethane particles D-8 with a volume average particle diameter of 40.0 μm were manufactured by changing the classification conditions.

Furthermore, urethane particles D-10 with a volume average particle diameter of 18.0 μm were manufactured by changing the classification conditions.

2-6. Manufacturing of Urethane Particles D-4

3 parts by mass of amine-based polyol A-4 and 97 parts by mass of isocyanate group-terminated prepolymer B-1 were added to water containing a suspension stabilizer (calcium phosphate) and were stirred, thereby obtaining a suspension solution.

Then, the suspension solution was warmed to initiate a reaction and was allowed to sufficiently react to produce the urethane particles. Thereafter, the urethane particles were collected by solid-liquid separation, and the suspension stabilizer was removed by washing, and the resulting substance was dried. The urethane particles thus obtained were classified using a wind force classifier (trade name: EJ-L-3 type, manufactured by Nittetsu Mining Co., Ltd.). The volume average particle diameter (median diameter) of the urethane particle was measured by a particle size distribution measuring instrument (trade name: Coulter Multisizer II, manufactured by Beckman Coulter, Inc.), and the result was 22.0 μm. This was defined as urethane particles D-4.

2-7. Manufacturing of Urethane Particles D-5

Urethane particles D-5 (volume average particle diameter of 22.0 μm) were manufactured in the same manner as in 2-5. Manufacturing of Urethane Particles D-3, 8, and 10 except that "Art Pearl U400 transparent" (trade name, volume average particle diameter of 15.0 μm, manufactured by Negami Chemical Industrial Co., Ltd.) was used as the urethane particles.

2-8. Manufacturing of Urethane Particles D-9

Urethane particles D-9 (volume average particle diameter of 22.0 μm) were manufactured in the same manner as in 2-5. Manufacturing of Urethane Particles D-3, 8, and 10 except that "Art Pearl JB400 transparent" (trade name, volume average particle diameter of 15.0 μm, manufactured by Negami Chemical Industrial Co., Ltd.) was used as the urethane particles.

2-9. Manufacturing of Urethane Particles E-1

Urethane particles E-1 (volume average particle diameter of 5.0 μm) were manufactured in the same manner as in 2-5. Manufacturing of Urethane Particles D-3, 8, and 10 except that "Art Pearl C800 transparent" (trade name, volume average particle diameter of 8.0 μm, manufactured by Negami Chemical Industrial Co., Ltd.) was used as the urethane particles.

2-10. Manufacturing of Urethane Particles E-5

Urethane particles E-5 (volume average particle diameter of 5.0 μm) were manufactured in the same manner as in 2-5. Manufacturing of Urethane Particles D-3, 8, and 10 except that "Art Pearl JB800 transparent" (trade name, volume average particle diameter of 8.0 μm, manufactured by Negami Chemical Industrial Co., Ltd.) was used as the urethane particles.

2-11. Manufacturing of Urethane Particles E-6

Urethane particles E-6 (volume average particle diameter of 5.0 μm) were manufactured in the same manner as in 2-6. Manufacturing of Urethane Particles D-4 except that polyol was changed to 35 parts by mass of polycarbonate-based polyol A-2, isocyanate was changed to 65 parts by mass of isocyanate group-terminated prepolymer B-2, and the

suspension solution stirring speed and the urethane particle classification conditions were changed.

2-12. Manufacturing of Urethane Particles E-8

Urethane particles E-8 (volume average particle diameter of 1.0 μm) were manufactured in the same manner as in 2-5. Manufacturing of Urethane Particles D-3, 8, and 10 except that "Art Pearl C1000 transparent" (trade name, volume average particle diameter of 3.0 μm, manufactured by Negami Chemical Industrial Co., Ltd.) was used as the urethane particles.

2-13. Manufacturing of Urethane Particles E-9

Urethane particles E-9 (volume average particle diameter of 12.0 μm) were manufactured in the same manner as in 2-5. Manufacturing of Urethane Particles D-3, 8, and 10 except that "Art Pearl C400 transparent" (trade name, volume average particle diameter of 15.0 μm, manufactured by Negami Chemical Industrial Co., Ltd.) was used as the urethane particles.

2-14. Manufacturing of Urethane Particles E-11

Urethane particles E-11 (volume average particle diameter of 5.0 μm) were manufactured in the same manner as in 2-5. Manufacturing of Urethane Particles D-3, 8, and 10 except that "Art Pearl CE400 transparent" (trade name, volume average particle diameter of 16.0 μm, manufactured by Negami Chemical Industrial Co., Ltd.) was used as the urethane particles.

Example 1

An upper end portion of the base layer roller 1 was gripped with the longitudinal direction kept in the vertical direction, was impregnated (dipped) in the surface layer coating solution S-1, and was then pulled up. The impregnation time for dip-coating was adjusted for 9 seconds, and the roller pulling-up speed was adjusted so that the initial speed was 20 mm/sec and the final speed was 2 mm/sec, and the speed was varied linearly with time from 20 mm/sec to 2 mm/sec. After the application, air drying was carried out at a temperature of 23°C for 30 minutes.

Then, drying was carried out at a temperature of 80°C for 1 hour in a hot wind circulation drier, and drying was then carried out at 160°C for 1 hour, thereby forming a dried film of a coating film of the surface layer coating solution S-1 on the conductive layer.

Furthermore, as surface treatment, the surface of the dried film was irradiated with ultraviolet rays with a wavelength of 254 nm so that the integrated light amount was 9000 mJ/cm$^2$, and a skin layer on the outermost surface of the dried film was removed, thereby forming a surface layer in which the conductive particles (conductive carbon black) in the dried film were exposed to the outer surface. As a light source for ultraviolet rays, a low-pressure mercury lamp (manufactured by Toshiba Lighting&Technology Corporation) was used. Thus, a charging roller according to Example 1 was produced.

3. Evaluation of Physical Properties

3-1. Protrusion Height

The protrusion height according to this aspect can be measured by scanning the outer surface of the surface layer of the charging roller with a laser microscope (trade name: VK-X150, manufactured by Keyence Corporation). First, the charging roller 1 was set so that the circumferential apex of the surface of the charging roller was directly below a lens of the laser microscope and the axial direction of the charging roller was set in the longitudinal direction of the field of view of the laser microscope. The shape of the outer surface of the surface layer was then measured under the following conditions.

Mode: Shape measurement expert
Measuring lens: 20 times
Z-Axis upper and lower limits: A range in which reflected light is not observed in the field of view of the laser
Laser brightness: Automatic
Measurement mode: Surface shape
Measuring size: High definition (2048 pixels × 1536 pixels)
Measurement quality: High Precision
Pitch: 0.2 μm

Then, the measurement results were read by a multi-file analysis application, which was attached software of the laser microscope, and the read images were corrected in the following order. Surface shape correction:

Correction method: Quadric surface correction, designation method: Region designation
Height cut level:

Cut Level: Strong
Smoothing:
Size: 7 × 7, Type: Simple mean

3-1-1. Measurement of Height of Protruding Portions in First Protruding Portion Group

First, protruding portions with heights of equal to or greater than 10.0 μm and protruding portions with heights exceeding 40.0 μm were determined under the following conditions, and protruding portions with heights of 10.0 μm to 40.0 μm were determined from the respective determination results.

Measurement mode: "Volume area measurement"
Setting of height threshold value: With reference to a mode of the height profiles, a value that was 10.0 μm higher than the reference and 40.0 μm higher than the reference.
Ignore small area: ON (lower limit: 100 pixels)

Next, the heights of the protruding portions with the determined heights of 10.0 μm to 40.0 μm were calculated from profile measurement.
The above measurement was carried out at a total of nine locations, namely three locations at equal intervals in the charging roller axial direction × three locations at equal intervals in the circumferential direction (which correspond to a total of nine locations including the center of the conductive roller in the axial direction, three locations of L/4 from both ends of the conductive roller to the center, and three locations in the circumferential direction at each location (phases of 0°, 120°, and 240°) when the length of the conductive roller in the axial direction is defined as L; hereinafter, description of "a total of nine locations, namely three locations at equal intervals in the charging roller axial direction × three locations at equal intervals in the circumferential direction") given below means the same locations), and protruding portions with height of 10.0 μm to 40.0 μm were determined to be protruding portions belonging to the first protruding portion group.
The arithmetic mean value thereof was regarded as an average height of the protruding portions in the first protruding portion group of the charging roller.

3-1-2. Heights of Protruding Portions in Second Protruding Portion Group

First, protruding portions with heights of from 0.2 μm to 5.0 μm were determined under the following condition. Note that since the axis pitch was set to 0.2 μm in the method of measuring the heights of the protruding portions on the surface of the charging roller, the heights of the protruding portions of 0.2 μm to 5.0 μm were the targets of calculation. Therefore, protruding portions with heights of less than 0.2 μm were not determined as protruding portions.

Measurement mode: "Volume area measurement"
Setting of height threshold value: With reference to a mode of height profiles, a value that was higher than the reference by 5.0 μm.
Ignore small area: ON (lower limit: 100 pixels)

Then, the heights of particles other than the particles at the protruding portions with the heights of greater than 5 μm determined in the image, that is, the heights of all the particles with heights of equal to or less than 5 μm were calculated by profile measurement.
The above measurement was carried out at a total of nine locations, namely three locations at equal intervals in the charging roller axial direction × the three locations at equal intervals in the circumferential direction, and protruding portions with height of 0.2 μm to 5.0 μm were determined to be protruding portions belonging to the second protruding portion group.
The arithmetic mean value was regarded as an average height of the protruding portions in the second protruding portion group of the charging roller.

3-2-1. Apex Density Spd1 of First Protruding Portions

Spd1 can be obtained by surface observation with a microscope similarly to the heights of the protruding portions. First, the measurement of the shape of the outer surface of the charging roller was performed similarly to the heights of the protruding portions. Then, the measurement results were read by multi-file analysis application software attached to the laser microscope. The read image was corrected in the same manner as the heights of the protruding portions.

Next, the number of protruding portions with sizes of equal to or greater than 10.0 μm and the number of protruding portions with sizes exceeding 40.0 μm were calculated by the following method, and a value obtained by dividing the difference therebetween by a measurement area was calculated as Spd1.

> Measurement mode: "Volume area measurement"
> Setting of height threshold value: With reference to a mode of the height profiles, a value that was 10.0 μm higher than the reference and 40.0 μm higher than the reference Ignore small area: ON (lower limit: 100 pixels)

The above measurement was carried out at a total of nine locations, namely three locations at equal intervals in the charging roller axial direction × three locations at equal intervals in the circumferential direction, and an arithmetic mean thereof was adopted.

3-2-2. Apex Density Spd2 of Second Protruding Portions

Spd2 can be obtained by surface observation with a microscope similarly to the heights of the protruding portions. First, the measurement of the shape of the outer surface of the charging roller was performed similarly to the heights of the protruding portions. Then, the measurement results were read by multi-file analysis application software attached to the laser microscope. The read image was corrected in the same manner as the heights of the protruding portions.

Then, the number of apexes of protruding portions with sizes of equal to or greater than 0.2 μm per unit area and the number of apexes of protruding portions with sizes exceeding 5.0 μm per unit area were calculated by the following method, and the difference therebetween was calculated as Spd2.

Measurement of Number of Apexes of Protruding Portions with Heights Exceeding 0.2 μm per Unit Area

> Measurement mode: "Surface roughness"
> Measuring region: Entire region
> Measurement value: Spda

Measurement of Number of Apexes of Protruding Portions with Heights Exceeding 5.0 μm per Unit Area

The number of apexes of the protruding portions with the sizes exceeding 5.0 μm was measured by the following method. Then, a value obtained by dividing a value obtained subtracting the number of apexes of the protruding portions with the sizes exceeding 5.0 μm from the number of Spda by a measurement area was regarded as Spd2.

> Measurement mode: "Volume area measurement"
> Setting of height threshold value: With reference to the mode of height profiles, a value that was higher than the reference by 5 μm
> Ignore small area: ON (lower limit: 100 pixels)

The above measurement was carried out at a total of nine locations, namely three locations at equal intervals in the charging roller axial direction × three locations at equal intervals in the circumferential direction, and an arithmetic mean thereof was adopted.

3-2-3. Number of Apexes of Protruding Portions with Heights Exceeding 40.0 μm

The number of apexes of the protruding portions with the heights exceeding 40 μm per unit area was measured in accordance with the method of measuring Spd1. Specifically, for setting of a height threshold value, a mode of height profiles was regarded as a reference, and a value that was higher than the reference by 40.0 μm was set for the measurement.

3-2-4. Proportions of First Protruding Portions and Second Protruding Portions

The proportions of the first protruding portions and the second protruding portion with reference to the protruding portions with the heights of equal to or greater than 0.2 μm on the surface of the charging roller were obtained using Expression (1) below from Spd1, Spd2, and Spda calculated by the methods that were similar to those described above.

$$(Spd1 + Spd2)/Spda \times 100...(1)$$

3-3-1. Universal Hardness HU1 of First Protruding Portions

A universal durometer (trade name: Fischer Scope HM 2000XYp, manufactured by Fischer Instrument GB Limited) was used for measurement. Specific measurement conditions will be described below.

- Measuring indenter: Vickers indenter (face angle of 136, Young's modulus of 1140, Poisson's ratio of 0.07, indenter material: diamond)
- Measurement environment: a temperature of 23°C and a relative humidity of 50%
- Maximum test load: 1.0 mN
- Load conditions: The load was applied proportionally to the time at a rate reaching the maximum test load in 30 seconds.
- Measurement portions: Apexes of the first protruding portions

In this evaluation, the universal hardness was calculated by Expression (2) below using a load F at the timing when the indenter was pushed by a depth of 0.4 μm from the surfaces of the measurement portions and a contact area A between the indenter and the surface layer at that time.

$$\text{Universal hardness (N/mm}^2\text{)} = F/A...(2)$$

The above measurement was carried out at a total of nine locations, namely three locations at equal intervals in the charging roller axial direction × three locations at equal intervals in the circumferential direction for a total of 27 first protruding portions, and an arithmetic mean value thereof was regarded as HU1 of the charging roller 1.

3-3-2 Universal Hardness HU2 of Second Protruding Portions

Measurement was performed in the same manner as the measurement conditions of HU1 described above except that the measurement regions were changed to the apexes of the second protruding portions, and the obtained value was regarded as HU2 of the charging roller 1.

3-3-3. Universal Hardness HUb of Binder Resin Portion in Surface Layer

Measurement was carried out in the same manner as the measurement conditions of HU1 described above other than that the measurement regions were changed to the binder resin portions where the first protruding portions and the second protruding portions were not present, and the obtained value was regarded as HUb of the charging roller 1.

3-4. Impedance Measurement

As pretreatment, platinum was deposited on the outer surface of the charging roller while the charging roller was rotated, thereby producing a measurement electrode (platinum electrode). At this time, an electrode with a width of 1.5 cm that was uniform in the circumferential direction was produced using a masking tape. It was possible to minimize contribution of the contact area between the measurement electrode and the electrophotographic member by the surface roughness of the electrophotographic member by forming the electrode.

Next, an aluminum sheet was wound around the electrode without any gap, and a measurement sample was formed. Then, an impedance measurement apparatus (trade name: Solartron 1260 and Solartron 1296; manufactured by Solartron Ametek) was connected to the measurement electrode and the outer surface of the support from the aluminum sheet.

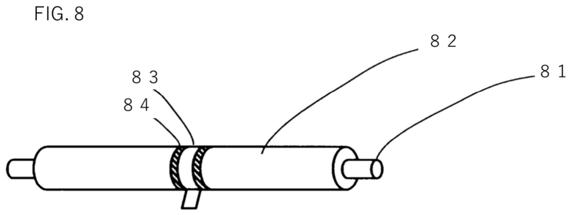

FIG. 8 illustrates an overview diagram of a state where the measurement electrode has been formed in the charging roller. In FIG. 8, 81 denotes the conductive support, 82 denotes the surface layer, 84 denotes the platinum deposited layer, and 83 denotes the aluminum sheet.

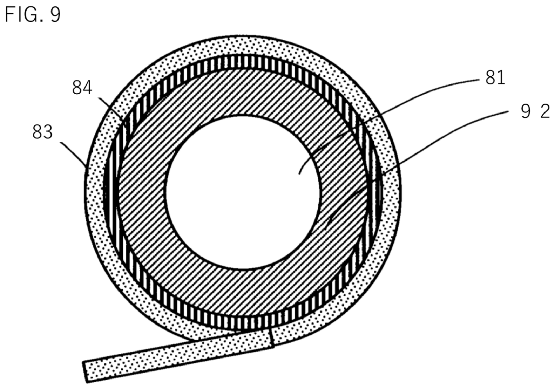

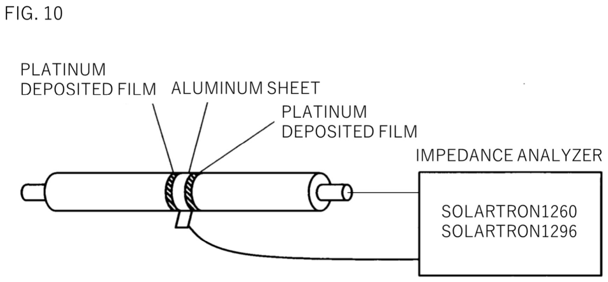

FIG. 9 illustrates a sectional view of the state where the measurement electrode has been formed in the charging roller. As in FIG. 9, it is important to achieve a state where the conductive support 81 and the measurement electrode 94 sandwich the surface layer and the conductive layer 92 (which are illustrated as one layer for convenience). As in FIG. 10, the outer surfaces of the aluminum sheet 83 and the support were connected to the measurement electrode on the side of the impedance measurement apparatus (Solartron 1260 and Solartron 1296; manufactured by Solartron Ametek). Impedance measurement was performed by adopting the conductive support and the aluminum sheet as two electrodes for measurement.

The impedance measurement was performed in an environment at a temperature of 23°C and a relative humidity of 50%, with an amplitude of 1 V, and at a frequency of $1.0 \times 10^{-2}$ Hz to $1.0 \times 10^{7}$ Hz. Here, the measurement location was changed when the frequency changed by one digit, and measurement was conducted every five points. The measurement points were set at center parts of regions obtained by equally dividing the electrophotographic member into five parts in the longitudinal direction, which was an axial direction. The arithmetic mean value thereof was used to obtain an absolute value of the impedance.

Then, the measurement results were used to create a graph of double logarithmic plotting the absolute value of the impedance on the vertical axis and the frequency on the horizontal axis. An inclination of the impedance at $1.0 \times 10^{5}$ Hz to $1.0 \times 10^{6}$ Hz (impedance inclination) was calculated from the graph.

3-5. Checking of Presence of Matrix-Domain (MD) Structure

The presence of a matrix-domain structure in the base layer (conductive layer) was checked by the following method. First, a cut piece was obtained using a razor such that a section orthogonal to the circumferential direction of the conductive layer was able to be observed. Then, platinum was deposited on a surface of the cut piece corresponding to the section of the conductive layer. Then, the platinum deposited surface of the cut piece was observed at a magnification of 1,000 times using a scanning electron microscope (SEM) (trade name: S-4800, manufactured by Hitachi High-Tech Corporation), thereby obtaining an SEM image.

The presence of a matrix-domain structure was checked in the thus obtained SEM image. This observation was carried out at a total of 12 locations, namely three locations at equal intervals in the charging roller axial direction × four locations at equal intervals in the circumferential direction for cut pieces collected from a total of 12 points, each of which was set at the center part of the respective regions. As the results, "Y" and "N" are described in a case where it was possible to observe the matrix-domain structure and in a case where it was not possible to observe it, respectively, in the item of "MD structure" in Tables 7 and 9.

Note that as a result of the evaluation, a plurality of domains 22b were dispersed in a matrix 22a and conductive paths were disconnected as illustrated in FIG. 5 in the SEM image in regard to the matrix-domain structure of the conductive layer in Example 1. On the other hand, communication was established in the matrix.

3-6. Measurement of Protruding Portions Derived from Exposed Portion of Electron Conducting Agent on Surface of Surface Layer

A method of measuring the number of protruding portions derived from the exposed portion of the electron conducting agent particles on the surface of the surface layer was as follows. First, an elastic layer including the surface layer was cut from the charging roller 1, platinum was deposited on the outermost surface of the surface layer, observation was performed at 40000 times in the region of 2.0 μm in the vertical direction × 2.0 μm in the horizontal direction using a scanning electron microscope (trade name: S-4800, manufactured by Hitachi High-Tech Corporation), and photograph imaging was performed.

The obtained images were analyzed using image analysis software (trade name: Image-Pro Plus, manufactured by Planetron). The captured SEM images were subjected to binarization processing to calculate the number of protruding portions. More specifically, in a case where carbon black was exposed, inclination of the shape occurred, and a contrast difference was generated between the protruding portions and the other parts. Five SEM images were captured, and an average value of the calculated numbers of particles was regarded as the number of fine protruding portions due to the conducting agent.

3-7. Elastic Modulus

For the measurement, a scanning probe microscope (SPM) (trade name: MFP-3D-Origin, manufactured by Oxford Instruments) was used. A specific method will be described below.

First, the outer surface of the charging roller 1 was marked so that the first protruding portions and the second protruding portions were able to be determined. Then, the charging roller 1 was cooled to -150°C, and a thin rubber piece with the section of the surface layer in the thickness direction appearing was cut using a cryo microtome (UC-6,

manufactured by Leica Microsystems).

The produced thin rubber piece was allowed to stand for 24 hours in an environment at room temperature of 23°C and a relative humidity of 50%. Then, the thin rubber piece was placed on a silicon wafer, and the silicon wafer was set on a stage of the scanning probe microscope. Then, a section part of the outer surface layer of the thin rubber piece was scanned with a probe (product name: AC160, manufactured by Olympus Corporation). Note that as conditions related to the probe, a spring constant of 28.23 nN/nm, an impulse constant of 82.59 nm/V, resonant frequencies of 282 kHz (first order) and 1.59 MHz (higher order) were set.

As other measurement conditions, the measurement mode of the SPM was an AM-FM mode, the free amplitude of the probe was 3 V, and the setpoint amplitudes were 2 V (first order) and 25 mV (high order). For the size of the field of view of 20 μm × 20 μm, the scanning speed was 1 Hz, and the numbers of scanning points were 256 points in the vertical direction and 256 points in the horizontal direction.

Note that as conditions for acquiring a force curve, the following conditions were adopted. The force curve was acquired under the conditions of a trigger value of 0.2 V to 0.5 V (depending on the hardness), the distance of measuring the force curve of 500 nm, and the scanning speed of 1 Hz (the speed at which the probe reciprocated once). Thereafter, fitting based on the Hertz theory was performed for each force curve. An arithmetic mean of eight points except for the highest value and the lowest value was obtained from the obtained results and was regarded as an elastic modulus of each measurement region.

3-7-1. Elastic Modulus E'1 of First Resin Particles

The elastic modulus E'1 of the first resin particles forming the first protruding portion group was measured by the following method.

The elastic modulus of a region near the center of the particle forming the first protruding portion in the section of the surface layer in the thickness direction in the thin rubber piece was measured on the basis of the above-described measurement method. The above measurement was carried out at a total of nine locations, namely three locations at equal intervals in the charging roller axial direction × three locations at equal intervals in the circumferential direction, for a total of 45 first protruding portions, and an arithmetic mean thereof was calculated.

3-7-2. Elastic Modulus E'2 of Second Resin Particles

The elastic modulus E'2 of the second resin particles forming the second protruding portion group was measured by the following method.

The elastic modulus of a region near the center of the particle forming the second protruding portion in the section of the surface layer in the thickness direction in the thin rubber piece was measured on the basis of the above-described measurement method. The above measurement was carried out at a total of nine locations, namely three locations at equal intervals in the charging roller axial direction × three locations at equal intervals in the circumferential direction for a total of 45 second protruding portions, and an arithmetic mean thereof was calculated.

3-8. Volume Average Particle Diameters Dv1 and Dv2 of Resin Particles That Are Present in Surface Layer

The volume average particle diameters Dv1 and Dv2 of the resin particles that were present in the surface layer were measured by the following method. First, the first resin particles forming the first protruding portion group and the second resin particles forming the second protruding portion group were distinguished by the marking in the above-described measurement of the elastic moduli.

Furthermore, an arithmetic mean value Ds of the area-equivalent circle diameter of a section of each resin particle was calculated from the sectional area of each divided resin particle. When the volume-equivalent sphere diameter of the resin particle was defined as D, a distance x from the center of the particle to the center of the section was able to be considered to have uniform distribution within a range of -D/2 to D/2 since each resin particle was a spherical shape and the section was obtained by randomly cutting the spherical shape. The volume-equivalent sphere diameter D of the resin particle was calculated from the arithmetic mean value Ds of the area-equivalent circle diameter of the section by Expression (4) below.

$$Ds = \frac{1}{D} \times 2 \times \int_{-\frac{D}{2}}^{\frac{D}{2}} \sqrt{\left(\frac{D}{2}\right)^2 - x^2}\, dx$$

Therefore,

$$D = 4/\pi \times Ds...(4)$$

x: The distance from the center of the particle to the center of the section

The above measurement was carried out at a total of nine locations, namely three locations at equal intervals in the charging roller axial direction × three locations at equal intervals in the circumferential direction (which correspond to a total of nine locations including the center of the conductive roller in the axial direction, three locations of L/4 from both ends of the conductive roller to the center, and three locations in the circumferential direction at each location (phases of 0°, 120°, and 240°) when the length of the conductive roller in the axial direction is defined as L) for five resin particles at each location in the first resin particle and the second resin particle. The thus obtained volume-equivalent sphere diameter D of each resin particle and the volume value obtained through conversion using $4/3 \times \pi \times (D/2)^3$ were used to calculate the volume average particle diameters Dv1 and Dv2 of the first resin particles and the second resin particles.

3-9. Film Thickness of Surface Layer

The film thickness of the surface layer in the depth direction from the outer surface according to the present aspect was measured by the following method.

First, a thin rubber piece including a section in the depth direction was cut out from the outer surface of the surface layer with a cutter knife. Then, the section was observed using an optical microscope, and the distance between the minimum point of a recessed portion between protruding portions that are present on the outer surface of the surface layer and the interface between the surface layer and the conductive elastic layer was measured. The above measurement was carried out at a total of nine locations, namely three locations at equal intervals in the charging roller axial direction × three locations at equal intervals in the circumferential direction at five points for each, namely a total of 45 points, and the arithmetic mean value thereof was regarded as a film thickness at the part of the surface layer where the first resin particles and the second resin particles were not present.

4. Evaluation

4-1. Evaluation of Vertical Streak Image

In order to confirm the function of suppressing adhesion of contamination to the charging roller 1, the following evaluation was conducted.

First, as an electrophotographic apparatus, an electrophotographic laser printer (trade name: hp Laserjet Enterprise 6701dn, manufactured by HP Development Company, L.P.) was prepared. Note that for evaluation in the light-pressure cleaning system, the amount of entry of a cleaning blade of a process cartridge of the laser printer into the photosensitive drum was reduced.

More specifically, the amount of entry was reduced by cutting a mounting surface of the cleaning blade by 1 mm. In this manner, while the torque of the process cartridge decreased, the amount of contamination due to the toner external additive component passing through the cleaning blade and breaking into the surface of the charging roller increased, and contamination was likely to occur.

Next, the charging roller 1, the electrophotographic apparatus, and the process cartridge were left to stand in the environment at 15°C/30%RH for 48 hours for the purpose of leveling the measurement environment.

The charging roller 1 left in the above-described environment was set as a charging roller of the process cartridge and was incorporated in the laser printer. Thereafter, a total of 50,000 prints of images were successively output in the same environment.

As the output images, an alphabet letter "E" with a size of 4 points was formed on an A4-size sheet at a printing rate of 1.0%.

Thereafter, halftone images (images of drawing horizontal lines with a width of 1 dot at an interval of 2 dots in a direction orthogonal to the rotational direction of the photosensitive drum) were output. The halftone image was visually observed, and vertical streak images were evaluated by the following criteria.

Evaluation of Vertical Streak Images on Halftone Images
Rank A: No vertical streak images were observed on the halftone image.
Rank B: The number of vertical streaks on the halftone image was from one to nine.
Rank C: The number of vertical streaks on the halftone image was equal to or greater than 10 and less than 20.
Rank D: The number of vertical streaks on the halftone image was equal to or greater than 20.

4-2. Quantification of Amount of Adhesion of Contamination to Surface

The charging roller 1 used in the test in 4-1 was taken out from the process cartridge, and the amount of adhering toner materials such as external additives adhering to the surface of the charging roller was quantified using a scanning electron microscope (S-3700N, manufactured by Hitachi High-Tech Corporation). Specifically, the quantification was conducted in a range of 500 μm × 600 μm at the center portion of the charging roller using an energy dispersive X-ray analyzer (trade name: Quantax; manufactured by Bruker) attached to the scanning electron microscope. Note that an all-round-type 30 mm 2EDS detector (trade name: Xflash6|10; manufactured by Bruker) was used as a detector.

As observation conditions, the acceleration voltage was set to 20 kV, and the detected amount [wt%] of Si was regarded as the amount of adhesion of contamination. The measurement was carried out at a total of nine locations, namely at three locations at intervals of 120° in the circumferential direction in regard to each of three locations including the center of the electrophotographic roller in the longitudinal direction and crown positions (the positions of 90 mm in the direction to both end portions from the center in the longitudinal direction), and an average value was regarded as the amount of adhesion of contamination in a durability test. The amount of adhesion of contamination to the charging roller 1 was 0.30 wt%.

Examples 2 to 34

Charging rollers in Examples 2 to 34 were manufactured in the same manner as in Example 1 except that the base layer roller and the surface layer coating solution were changed to those described in Table 6. Note that the concentrations of the solid contents in the surface layer coating solutions were appropriately changed to change the layer thicknesses of the surface layers for the charging rollers in Examples 30 to 34.

Measurement and evaluation were conducted in regard to the same items as those in Example 1 for the obtained charging rollers in Examples 2 to 34. The obtained results are shown in Table 7.

[Table 6]

| | Base layer No. | Surface layer coating solution No. | Surface treatment |
|---|---|---|---|
| Example1 | 1 | S-1 | Yes |
| Example2 | 1 | S-2 | Yes |
| Example3 | 1 | S-3 | Yes |
| Example4 | 1 | S-4 | Yes |
| Example5 | 1 | S-5 | Yes |
| Example6 | 1 | S-6 | Yes |
| Example7 | 1 | S-7 | Yes |
| Example8 | 1 | S-8 | Yes |
| Example9 | 1 | S-9 | Yes |
| Example10 | 1 | S-10 | Yes |
| Example11 | 1 | S-11 | Yes |
| Example12 | 1 | S-12 | Yes |
| Example13 | 1 | S-13 | Yes |
| Example14 | 1 | S-14 | Yes |
| Example15 | 1 | S-15 | Yes |
| Example16 | 1 | S-16 | Yes |
| Example17 | 1 | S-17 | Yes |
| Example18 | 1 | S-18 | Yes |
| Example19 | 2 | S-1 | Yes |
| Example20 | 3 | S-1 | Yes |
| Example21 | 4 | S-1 | Yes |
| Example22 | 5 | - | Yes |

(continued)

| | Base layer No. | Surface layer coating solution No. | Surface treatment |
|---|---|---|---|
| Example23 | 1 | S-1 | No |
| Example24 | 1 | S-19 | Yes |
| Example25 | 1 | S-20 | Yes |
| Example26 | 1 | S-21 | Yes |
| Example27 | 1 | S-22 | Yes |
| Example28 | 1 | S-23 | Yes |
| Example29 | 6 | S-24 | Yes |
| Example30 | 5 | S-25 | Yes |
| Example31 | 1 | S-1 | Yes |
| Example32 | 1 | S-1 | Yes |
| Example33 | 1 | S-1 | Yes |
| Example34 | 1 | S-1 | Yes |

[Table 7]

| | | | | | | | | | | | | | | | | | | | Image evaluation | | |
|---|---|---|---|---|---|---|---|---|---|---|---|---|---|---|---|---|---|---|---|---|---|
| | Average height of first protruding portion group μm | Spd1 | HU1 N/mm2 | Average height of second protruding portion group μm | Spd2 | HU2 N/mm2 | over 40 | MD structure | Impedance inclination | Two-layer roller | Number of fine protrusions due to conducting agent | HUb N/mm2 | Proportions of first and second protrusions % | Dv1 μm | Dv2 μm | E'1 Mpa | E'2 Mpa | Film thickness μm | HT vertical streak rank | Number of HT vertical streaks | Amount of adhesion of contamination wt.% |
| Example1 | 14.7 | 50 | 4.0 | 2.3 | 10112 | 1.5 | 0.3 | Y | -0.38 | ○ | 211 | 3.1 | 99.5 | 21.9 | 5.1 | 1067 | 28 | 7.9 | A | 0 | 0.30 |
| Example2 | 14.3 | 51 | 4.1 | 2.8 | 8346 | 1.6 | 0.3 | Y | -0.37 | ○ | 198 | 3.3 | 99.5 | 22.0 | 7.8 | 1044 | 28 | 8.2 | A | 0 | 0.35 |
| Example3 | 15 | 51 | 4.0 | 0.3 | 18923 | 1.4 | 0.6 | Y | -0.38 | ○ | 201 | 3.1 | 99.5 | 22.0 | 3.0 | 1038 | 26 | 7.8 | B | 1 | 0.40 |
| Example4 | 14.2 | 49 | 4.1 | 4.9 | 5987 | 1.5 | 0.6 | Y | -0.38 | ○ | 195 | 3.2 | 99.5 | 22.1 | 10.1 | 1011 | 36 | 8.0 | B | 5 | 0.70 |
| Example5 | 10.3 | 46 | 3.9 | 2.1 | 9620 | 1.5 | 0.0 | Y | -0.39 | ○ | 210 | 2.9 | 98.2 | 15.0 | 5.1 | 1001 | 34 | 7.9 | B | 4 | 0.60 |
| Example6 | 39.1 | 52 | 4.1 | 2.3 | 10211 | 1.6 | 3.0 | Y | -0.37 | ○ | 205 | 2.9 | 99.5 | 30.1 | 5.1 | 989 | 28 | 8.0 | A | 0 | 0.34 |
| Example7 | 13.8 | 50 | 4.0 | 1.9 | 9994 | 1.6 | 0.3 | Y | -0.37 | ○ | 197 | 2.9 | 98.5 | 18.1 | 5.0 | 1024 | 31 | 9.6 | A | 0 | 0.30 |
| Example8 | 15.1 | 11 | 3.9 | 2.0 | 9555 | 1.6 | 0.6 | Y | -0.37 | ○ | 211 | 3.1 | 99.5 | 22.0 | 5.0 | 959 | 34 | 7.8 | B | 4 | 0.64 |
| Example9 | 14.6 | 30 | 3.9 | 2.0 | 10002 | 1.4 | 0.9 | Y | -0.39 | ○ | 204 | 2.9 | 99.5 | 22.0 | 4.9 | 1049 | 31 | 7.6 | A | 0 | 0.32 |
| Example10 | 13.9 | 59 | 4.0 | 2.2 | 9702 | 1.4 | 0.6 | Y | -0.39 | ○ | 206 | 3.1 | 98.9 | 22.1 | 5.0 | 1021 | 31 | 8.2 | A | 0 | 0.35 |
| Example11 | 15.1 | 90 | 4.1 | 2.1 | 10315 | 1.6 | 0.9 | Y | -0.39 | ○ | 196 | 3.0 | 98.6 | 22.0 | 4.9 | 995 | 29 | 7.5 | B | 3 | 0.52 |
| Example12 | 15.2 | 53 | 2.0 | 2.2 | 10425 | 1.4 | 0.9 | Y | -0.39 | ○ | 197 | 3.0 | 99.5 | 21.9 | 5.1 | 110 | 27 | 8.1 | B | 4 | 0.61 |
| Example13 | 13.9 | 51 | 4.9 | 2.3 | 10013 | 1.5 | 0.6 | Y | -0.39 | ○ | 199 | 2.8 | 99.5 | 20.1 | 4.9 | 1989 | 31 | 8.0 | B | 8 | 0.91 |
| Example14 | 14.5 | 54 | 4.1 | 1.9 | 4012 | 1.5 | 0.9 | Y | -0.38 | ○ | 194 | 3.1 | 98.3 | 21.9 | 5.1 | 1011 | 30 | 8.3 | B | 7 | 0.88 |
| Example15 | 15.1 | 55 | 4.0 | 2.4 | 11987 | 1.5 | 0.9 | Y | -0.38 | ○ | 203 | 2.9 | 99.7 | 22.0 | 5.1 | 1010 | 30 | 7.9 | A | 0 | 0.31 |
| Example16 | 14.3 | 50 | 3.9 | 2.0 | 24991 | 1.4 | 0.6 | Y | -0.37 | ○ | 194 | 3.0 | 99.8 | 21.9 | 5.1 | 1036 | 31 | 8.1 | A | 0 | 0.32 |
| Example17 | 14.8 | 48 | 4.0 | 2.0 | 10014 | 1.0 | 0.6 | Y | -0.39 | ○ | 207 | 2.8 | 99.4 | 22.0 | 5.0 | 988 | 12 | 7.8 | A | 0 | 0.34 |
| Example18 | 14.7 | 49 | 4.0 | 2.3 | 9975 | 1.9 | 0.9 | Y | -0.38 | ○ | 202 | 2.8 | 99.5 | 22.0 | 4.9 | 975 | 33 | 8.2 | B | 8 | 0.92 |
| Example19 | 14.1 | 51 | 3.9 | 2.1 | 9837 | 1.4 | 0.6 | N | -1.00 | ○ | 204 | 2.7 | 99.6 | 21.9 | 4.9 | 1024 | 29 | 8.2 | C | 17 | 1.46 |
| Example20 | 15.1 | 53 | 4.1 | 2.3 | 9968 | 1.4 | 0.6 | Y | -0.81 | ○ | 205 | 2.9 | 99.3 | 21.9 | 5.1 | 978 | 31 | 8.1 | B | 7 | 0.86 |
| Example21 | 14.9 | 51 | 4.0 | 2.1 | 10043 | 1.4 | 0.9 | Y | -0.93 | ○ | 197 | 3.3 | 99.1 | 22.1 | 4.9 | 969 | 27 | 8.0 | B | 9 | 0.96 |
| Example22 | 16.7 | 47 | 4.8 | 2.2 | 6333 | 1.6 | 1.5 | Y | -0.38 | × | 58 | 3.2 | 99.5 | 30.0 | 10.0 | 2545 | 28 | 8.0 | C | 19 | 1.60 |
| Example23 | 15 | 51 | 3.9 | 2.0 | 10128 | 1.6 | 0.6 | Y | -0.37 | ○ | 0 | 2.7 | 99.4 | 22.0 | 5.1 | 957 | 34 | 8.2 | C | 18 | 1.55 |
| Example24 | 15.1 | 51 | 3.9 | 2.0 | 10098 | 1.6 | 0.9 | Y | -0.37 | ○ | 156 | 5.3 | 99.5 | 22.0 | 5.0 | 1233 | 31 | 7.9 | A | 0 | 0.33 |
| Example25 | 14.8 | 50 | 4.1 | 2.1 | 10534 | 1.5 | 0.9 | Y | -0.37 | ○ | 251 | 1.1 | 99.5 | 22.0 | 5.0 | 896 | 29 | 7.7 | B | 1 | 0.44 |
| Example26 | 14.2 | 48 | 3.9 | 2.1 | 10121 | 1.5 | 0.6 | Y | -0.39 | ○ | 106 | 10.9 | 99.6 | 21.9 | 4.9 | 1521 | 31 | 7.8 | B | 8 | 0.90 |
| Example27 | 14.6 | 52 | 4.0 | 2.1 | 10294 | 1.4 | 0.9 | Y | -0.38 | ○ | 207 | 0.8 | 99.2 | 21.9 | 4.9 | 701 | 28 | 7.8 | B | 3 | 0.50 |
| Example28 | 14.1 | 51 | 4.1 | 2.3 | 10231 | 1.4 | 0.6 | Y | -0.39 | ○ | 210 | 3.0 | 96.8 | 22.0 | 4.9 | 978 | 27 | 7.9 | C | 14 | 1.21 |
| Example29 | 14.2 | 51 | 5.0 | 2.1 | 10154 | 1.4 | 0.6 | Y | -0.38 | ○ | 204 | 3.1 | 99.4 | 20.1 | 5.1 | 2545 | 30 | 8.1 | C | 18 | 1.53 |
| Example30 | 12.2 | 48 | 4.7 | 2.1 | 4892 | 1.5 | 1.2 | Y | -0.39 | ○ | 198 | 3.2 | 99.5 | 30.0 | 10.1 | 2573 | 28 | 4.1 | C | 16 | 1.38 |
| Example31 | 18.1 | 48 | 4.0 | 2.2 | 12451 | 1.6 | 2.2 | Y | -0.38 | ○ | 199 | 3.1 | 99.4 | 22.0 | 5.0 | 1041 | 29 | 2.2 | B | 2 | 0.48 |
| Example32 | 16.1 | 52 | 3.9 | 2.2 | 10449 | 1.5 | 1.9 | Y | -0.38 | ○ | 201 | 3.1 | 99.4 | 21.9 | 5.1 | 1017 | 30 | 4.1 | A | 0 | 0.32 |
| Example33 | 12.3 | 49 | 4.1 | 2.0 | 7456 | 1.5 | 0.6 | Y | -0.38 | ○ | 200 | 2.8 | 99.6 | 21.9 | 4.9 | 1056 | 29 | 14.9 | A | 0 | 0.34 |
| Example34 | 10.4 | 41 | 3.9 | 1.9 | 6001 | 1.5 | 0.3 | Y | -0.38 | ○ | 209 | 3.0 | 99.4 | 21.9 | 5.0 | 1057 | 31 | 20.6 | B | 7 | 0.85 |

The unit of Spd1 and Spd2 is pieces/mm$^2$.
over40 is the number of apexes (pieces/mm$^2$) of the protruding portions with heights exceeding 40.0 μm.
In the column of "Two-layer roller", O indicates that the surface layer and the base layer are included, while × indicates that only the base layer is included.

"Proportions of first protrusions and second protrusion" indicates a value of (Spd1 + Spd2)/Spda × 100.

"Number of fine protrusions due to conducting agent" indicates the number of protruding portions derived from the exposed portions of the conductive fine particles in a region (a region of 4.0 μm$^2$) of 2.0 μm in the vertical direction and 2.0 μm in the horizontal direction in observation of the surface of the surface layer with a scanning electron microscope.
"Film thickness" indicates an average value of film thicknesses at parts where the first resin particles and the second resin particles are not present in the surface layer.

Comparative Examples

Comparative Example 1

A charging roller in Comparative Example 1 was manufactured in the same manner as in Example 1 except that the base layer roller and the surface layer coating solution were changed as described in Table 8, and the same measurement and evaluation as those in Example 1 were conducted. The results are shown in Table 9.
In Comparative Example 1, neither the first protruding portions nor the second protruding portions were included, the contact area with the photosensitive drum thus increased, the amount of adhesion of contamination increased, and the rank of vertical streak images was evaluated as D.

Comparative Example 2

100 parts by mass of thermoplastic N-methoxymethylated 6-nylon (trade name: Trezine F-30K, manufactured by Nagase ChemteX Corporation) as a polymer component, 5 parts by mass of methylenebisethylmethylaniline (trade name: Curehard-MED, manufactured by Ihara Chemical Industry Co., Ltd.) as a curing agent, and 18 parts by mass of carbon black (trade name: charge Black HS100, manufactured by Denki Kagaku Kogyo Kabushiki Kaisha) as a conducting agent were mixed in tetrahydrofuran (THF).
To the mixture solution, 10 parts by mass of nylon resin particles D-7 (trade name: Orgasol series, manufactured by Arkema, volume average particle diameter of 20.0 μm) as resin particles and 10 parts by mass of nylon resin particles E-7 (trade name: Orgasol series, manufactured by Arkema, volume average particle diameter of 10.0 μm) were further added as resin particles, and the mixture was sufficiently stirred to obtain a uniform solution. Thereafter, each component in the solution was dispersed using two rolls. A charging roller in Comparative Example 2 was manufactured by dipping the base layer roller in the thus obtained surface layer coating solution S-26 in the same manner as in Example 1, and the same measurement and evaluation as those in Example 1 were conducted. The results are shown in Table 9.
In Comparative Example 2, high-hardness nylon particles were used as the resin particles forming the first protrusions and the second protrusions, the binder resin also has high hardness, the contamination that had passed through the cleaning blade was thus fixed to the contact portion with the photosensitive drum, the region where the first protruding portions were not present was unlikely to rise, and peeling-off of the adhering contamination was unlikely to occur. As a result, the amount of adhesion of contamination increased, and the rank of vertical streak images was evaluated as D.

Comparative Examples 3 to 16

Charging rollers in Comparative Examples 3 to 16 were manufactured in the same manner as in Example 1 except that the base layer roller and the surface layer coating solution were changed to those described in Table 8. Note that the concentrations of the solid contents in the surface layer coating solutions were appropriately adjusted to change the layer thicknesses of the surface layers in the charging rollers in Comparative Examples 4, 6, and 7. The same measurement and evaluation as those in Example 1 were conducted for the charging rollers in Comparative Examples 3 to 16. The results are shown in Table 9.
In the charging roller in Comparative Example 3, the number of the first protruding portions was large, the number of contact points with the photosensitive drum increased, contamination was fixed at more points, the amount of adhesion of contamination thus increased, and the rank of vertical streak images was evaluated as D.
In the charging roller in Comparative Example 4, the number of the first protruding portions was small, the gap

between the charging roller and the photosensitive drum was not able to be maintained, the distance decreased, the amount of adhesion of contamination thus increased, and the rank of vertical streak images was evaluated as D.

Since the charging roller in Comparative Example 5 did not include the first protruding portions, the contact area with the photosensitive drum increased, the amount of adhesion of contamination increased, and the rank of vertical streak images was thus evaluated as D.

In the charging roller in Comparative Example 6, the first resin particles were excessively large, protruding portions with heights exceeding the heights of the first protruding portions were thus formed, the first resin particles strongly hit the photosensitive drum, the photosensitive drum was thus scraped, and the amount of contamination passing through the cleaning blade increased. As a result, the amount of adhesion of contamination increased, and the rank of vertical streak images was evaluated as D.

In the charging roller in Comparative Example 7, the particle diameters of the first resin particles were small, the first protruding portions were not able to be formed, and the gap from the photosensitive drum decreased. As a result, the amount of adhesion of contamination increased, and the rank of vertical streak images was evaluated as D.

In the charging roller in Comparative Example 8, the universal hardness of the first protruding portions was low, the gap from the photosensitive drum was not able to be maintained, and the gap decreased. As a result, the amount of adhesion of contamination increased, and the rank of vertical streak images was evaluated as D.

In the charging roller in Comparative Example 9, the universal hardness of the first protruding portions was excessively high, more contamination was thus fixed to the contact portion with the photosensitive drum, the amount of adhesion of contamination increased, and the rank of vertical streak images was evaluated as D.

In the charging roller in Comparative Example 10, the particle diameters of the second resin particles were excessively small, the second protruding portion group was not able to be formed, and irregularities were not formed in the region where the first resin particles were not present in the configuration. As a result, the contact area with the flying contamination increased, peeling-off becomes unlikely to occur, the amount of adhesion of contamination thus increased, and the rank of vertical streak images was evaluated as D.

In the charging roller in Comparative Example 11, the particle diameters of the second resin particles were large, and the protruding portions with heights exceeding the heights of the second protruding portions were formed. Since the distance between the protruding portions formed by the second resin particles and the photosensitive drum decreased, some of the protruding portions came into contact with the photosensitive drum, and flying of the contamination significantly occurred. As a result, the amount of adhesion of contamination increased, and the rank of vertical streak images was evaluated as D.

In the charging roller in Comparative Example 12, the second protruding portions were not formed as in Comparative Example 10, and the rank of vertical streak images was thus evaluated as D.

In the charging roller in Comparative Example 13, the apex density Spd2 of the second protruding portions was small, irregularities in the region where the first protruding portions were not present were not sufficiently formed, the amount of adhesion of contamination thus increased, and the rank of vertical streak images was evaluated as D.

The charging roller in Comparative Example 14 was configured to have Spd2 increased by adding a large amount of second resin particles, the interface between the binder resin and the second resin particles increased by adding a large amount of resin particles, the pressure generated when the first protruding portions came into contact with the photosensitive drum was dispersed, and the region where the first resin particles were not present did not rise in an arch shape. As a result, peeling-off of the contamination did not occur, the amount of adhesion of the contamination increased, and the rank of vertical streak images was thus evaluated as D.

In the charging roller in Comparative Example 15, HU2 was low, the second resin particles were flexible, tackiness of the region where the first protruding portions were not present thus increased, and the contamination was thus likely to adhere. As a result, the amount of adhesion of contamination increased, and the rank of vertical streak images was evaluated as D.

In the charging roller in Comparative Example 16, since the universal hardness HU2 of the second protruding portions was high, the region where the first protruding portions were not present was unlikely to rise when the first protruding portions came into contact with the photosensitive drum, and peeling-off of the contamination was unlikely to occur. As a result, the amount of adhesion of contamination increased, and the rank of vertical streak images was evaluated as D.

[Table 8]

| | Base layer No. | Surface layer coating solution No. | Surface treatment |
|---|---|---|---|
| Comparative Example1 | 1 | S-25 | Yes |
| Comparative Example2 | 1 | S-26 | No |
| Comparative Example3 | 1 | S-27 | Yes |

(continued)

| | Base layer No. | Surface layer coating solution No. | Surface treatment |
|---|---|---|---|
| Comparative Example4 | 1 | S-28 | Yes |
| Comparative Example5 | 1 | S-29 | Yes |
| Comparative Example6 | 1 | S-30 | Yes |
| Comparative Example7 | 1 | S-31 | Yes |
| Comparative Example8 | 1 | S-32 | Yes |
| Comparative Example9 | 1 | S-33 | Yes |
| Comparative Example10 | 1 | S-34 | Yes |
| Comparative Example11 | 1 | S-35 | Yes |
| Comparative Example12 | 1 | S-36 | Yes |
| Comparative Example13 | 1 | S-37 | Yes |
| Comparative Example14 | 1 | S-38 | Yes |
| Comparative Example15 | 1 | S-39 | Yes |
| Comparative Example16 | 1 | S-40 | Yes |

[Table 9]

| | Average height of first protruding portion group µm | Spd1 | HU1 N/mm2 | Average height of second protruding portion group µm | Spd2 | HU2 N/mm2 | over 40 | MD structure | Impedance inclination | Two-layer roller | Number of fine protrusions due to conducting agent | HUb N/mm2 | Proportions of first and second protrusions % | Dv1 µm | Dv2 µm | E'1 Mpa | E'2 Mpa | Film thickness µm | Image evaluation: HT vertical streak rank | Image evaluation: Number of HT vertical streaks | Image evaluation: Amount of adhesion of contamination wt.% |
|---|---|---|---|---|---|---|---|---|---|---|---|---|---|---|---|---|---|---|---|---|---|
| Comparative Example1 | - | - | - | - | - | - | 0.0 | Y | -0.38 | ○ | 204 | - | - | - | - | - | - | - | D | 68 | 3.35 |
| Comparative Example2 | 15.1 | 45 | 25.6 | 2.5 | 10068 | 24.8 | 1.2 | Y | -0.39 | ○ | - | 25.1 | 99.6 | 20.1 | 9.4 | 3014 | 30 | 1.0 | D | 51 | 2.74 |
| Comparative Example3 | 18.2 | 122 | 4.3 | 2.1 | 9957 | 1.5 | 1.5 | Y | -0.37 | ○ | 194 | 3.2 | 99.1 | 22.0 | 5.1 | 1023 | 28 | 8.0 | D | 25 | 1.99 |
| Comparative Example4 | 14.2 | 5 | 4.1 | 2.3 | 9846 | 1.5 | 0.6 | Y | -0.38 | ○ | 199 | 3.2 | 98.4 | 21.9 | 5.1 | 1015 | 31 | 25.0 | D | 37 | 2.37 |
| Comparative Example5 | - | 0 | - | 2.2 | 10257 | 1.5 | 0.0 | Y | -0.39 | ○ | 201 | 3.0 | 99.6 | - | 5.0 | 999 | 30 | 8.0 | D | 47 | 2.64 |
| Comparative Example6 | - | 0 | - | 2.1 | 10234 | 1.5 | 18.1 | Y | -0.38 | ○ | 210 | 2.8 | 99.5 | 39.8 | 5.1 | 1000 | 31 | 4.0 | D | 21 | 1.86 |
| Comparative Example7 | - | 0 | - | 2.0 | 9790 | 1.5 | 0.0 | Y | -0.38 | ○ | 204 | 3.0 | 99.0 | 15.0 | 4.9 | 1010 | 29 | 25.0 | D | 35 | 2.28 |
| Comparative Example8 | 14.2 | 50 | 1.1 | 2.0 | 10115 | 1.5 | 0.6 | Y | -0.37 | ○ | 209 | 3.1 | 98.9 | 20.0 | 4.9 | 1041 | 11 | 8.0 | D | 41 | 2.49 |
| Comparative Example9 | 15 | 49 | 10.9 | 2.1 | 10090 | 1.5 | 0.9 | Y | -0.39 | ○ | 198 | 3.0 | 99.5 | 20.1 | 4.9 | 1007 | 28 | 8.0 | D | 28 | 2.07 |
| Comparative Example10 | 14.9 | 92 | 4.4 | - | 0 | 1.5 | 0.9 | Y | -0.38 | ○ | 205 | 2.9 | 98.1 | 22.0 | 1.2 | 1015 | 29 | 8.0 | D | 22 | 1.91 |
| Comparative Example11 | 14.5 | 91 | 4.2 | - | 0 | 1.5 | 0.6 | Y | -0.38 | ○ | 195 | 3.1 | 6.9 | 22.0 | 11.9 | 1024 | 31 | 8.0 | D | 31 | 2.17 |
| Comparative Example12 | 14.6 | 123 | 4.3 | - | - | - | 0.6 | Y | -0.39 | ○ | 196 | 3.2 | 89.5 | 21.9 | - | 998 | - | 8.0 | D | 38 | 2.41 |
| Comparative Example13 | 14.9 | 51 | 4.3 | 2.2 | 3012 | 1.5 | 0.6 | Y | -0.39 | ○ | 201 | 2.9 | 98.1 | 22.1 | 5.1 | 1090 | 31 | 8.0 | D | 29 | 2.13 |
| Comparative Example14 | 14.9 | 54 | 4.2 | 2.3 | 52894 | 1.5 | 0.9 | Y | -0.37 | ○ | 202 | 3.3 | 99.8 | 22.1 | 4.9 | 978 | 31 | 8.0 | D | 21 | 1.9 |
| Comparative Example15 | 14.8 | 50 | 2.9 | 2.3 | 10053 | 0.6 | 0.6 | Y | -0.37 | ○ | 197 | 1.0 | 99.0 | 22.1 | 6.9 | 1089 | 11 | 8.0 | D | 26 | 2.02 |
| Comparative Example16 | 15.2 | 51 | 4.1 | 1.9 | 9997 | 3.0 | 0.9 | Y | -0.38 | ○ | 201 | 3.2 | 98.9 | 22.0 | 5.1 | 988 | 997 | 8.0 | D | 33 | 2.2 |

The unit of Spd1 and Spd2 is pieces/mm$^2$.

over40 is the number of apexes (pieces/mm$^2$) of the protruding portions with heights exceeding 40.0 $\mu$m.

In the column of "Two-layer roller", O indicates that the surface layer and the base layer are included, while × indicates that only the base layer is included.

"Proportions of first protrusion and second protrusion" indicates a value of (Spd1 + Spd2)/Spda × 100.

"Number of fine protrusions due to conducting agent" indicates the number of protruding portions derived from the exposed portions of the conductive fine particles in a region (a region of 4.0 $\mu m^2$) of 2.0 μm in the vertical direction and 2.0 μm in the horizontal direction in observation of the surface of the surface layer with a scanning electron microscope.

"Film thickness" indicates an average value of film thicknesses at parts where the first resin particles and the second resin particles are not present in the surface layer.

Various embodiments have been described in detail above but it will be understood that the present disclosure is not limited to these embodiments and encompasses all modifications, variants, alternatives and equivalents falling within the scope of the appended claims.

## Claims

1. A charging roller comprising:

   a plurality of protruding portions that are present on a surface of the charging roller, wherein
   when, among the plurality of protruding portions, a group of protruding portions with heights of 10.0 μm to 40.0 μm is defined as a first protruding portion group,
   a group of protruding portion with heights of 0.2 μm to 5.0 μm is defined as a second protruding portion group, and the number of apexes of the protruding portions comprised in the first protruding portion group and the number of apexes of the protruding portions comprised in the second protruding portion group per unit area on the surface of the charging roller are defined as Spd1 and Spd2, respectively,
   the Spd1 is 10 pieces/$mm^2$ to 90 pieces/$mm^2$,
   the Spd2 is 4000 pieces/$mm^2$ to 25000 pieces/$mm^2$,
   the number of apexes of protruding portions with heights exceeding 40.0 μm per unit area on the surface of the charging roller is not more than 3.0 pieces/$mm^2$, and
   when a universal hardness of the protruding portions comprised in the first protruding portion group and a universal hardness of the protruding portions included in the second protruding portion group measured under a condition of a pushing depth of 0.4 μm are defined as HU1 and HU2, respectively,
   the HU1 is 2.0 N/$mm^2$ to 5.0 N/$mm^2$, and
   the HU2 is at least 1.0 N/$mm^2$ and less than 2.0 N/$mm^2$.

2. The charging roller according to claim 1, further comprising: a conductive support; a base layer provided on the support; and a surface layer provided on the base layer.

3. The charging roller according to claim 2, wherein when an impedance is measured by providing a platinum electrode directly on an outer surface of the charging roller and applying an AC voltage with an amplitude of 1 V between an outer surface of the support and the platinum electrode while a frequency is changed between $1.0 \times 10^{-2}$ Hz to $1.0 \times 10^{7}$ Hz in an environment at a temperature of 23°C and a relative humidity of 50%, and when double logarithmic plotting with the frequency on a horizontal axis and with the impedance on a vertical axis is performed, an inclination at the frequency of $1.0 \times 10^{5}$ Hz to $1.0 \times 10^{6}$ Hz is -0.80 to -0.30.

4. The charging roller according to claim 2 or 3, wherein the base layer includes a matrix comprising a first rubber crosslinked material and domains comprising a second rubber crosslinked material and conductive particles dispersed in the matrix.

5. The charging roller according to any one of claims 2 to 4, wherein

   the surface layer comprises carbon black, and
   the carbon black is exposed to a surface of the surface layer.

6. The charging roller according to any one of claims 2 to 5, wherein

the surface layer comprises a binder resin, and
when universal hardness of the binder resin measured under a condition of a pushing depth of 0.4 μm is defined as HUb, the HUb is 1.0 N/mm$^2$ to 5.0 N/mm$^2$.

**7.** The charging roller according to any one of claims 2 to 6, wherein

the surface layer comprises a first resin particle and a second resin particle,
the first resin particle comprises a polyurethane resin, and has a volume average particle diameter Dv1 of 15.0 μm to 30.0 μm,

the second resin particle comprises a polyurethane resin, and has a volume average particle diameter Dv2 of 3.0 μm to 10.0 μm,

the protruding portions comprised in the first protruding portion group are protruding portions derived from the first resin particle, and
the protruding portions comprised in the second protruding portion group are protruding portions derived from the second resin particle.

**8.** The charging roller according to claim 7, wherein

an elastic modulus E'1 of the first resin particle is 100 MPa to 2000 MPa, and
an elastic modulus E'2 of the second resin particle is 2 MPa to 50 MPa.

**9.** The charging roller according to claim 7 or 8, wherein an average value of a layer thickness at a part, where the first resin particle and the second resin particle are not present, of the surface layer is 4.0 μm to 15.0 μm.

**10.** The charging roller according to any one of claims 1 to 9, wherein when the number of apexes of protruding portions with heights of at least 0.2 μm per unit area on the surface of the charging roller is defined as Spda (pieces/mm$^2$), proportions of the first protruding portion and the second protruding portion represented by (Spd1 + Spd2)/Spda × 100 are at least 98.0%.

**11.** The charging roller according to any one of claims 1 to 10, wherein the Spd1 is 30 pieces/mm$^2$ to 60 pieces/mm$^2$.

**12.** The charging roller according to any one of claims 1 to 11, wherein the Spd2 is 4000 pieces/mm$^2$ to 12000 pieces/mm$^2$.

**13.** A process cartridge attachable to and detachable from a main body of an electrophotographic image forming apparatus, wherein

the process cartridge comprises: an electrophotographic photosensitive member; and a charging roller that is disposed to be able to charge the electrophotographic photosensitive member, and
the charging roller is the charging roller according to any of claims 1 to 12.

**14.** An electrophotographic image forming apparatus comprising:
an electrophotographic photosensitive member; and a charging roller that is disposed to be able to charge the electrophotographic photosensitive member, wherein
the charging roller is the charging roller according to any one of claims 1 to 12.

FIG. 1A
1 1
1 3
FIG. 1B
1 2
1 4

FIG. 2

2 1
2
2 3
2 2

FIG. 3

ABSOLUTE VALUE |Z| (Ω) OF IMPEDANCE

INCLINATION
FREQUENCY f (Hz)

FIG. 4

ABSOLUTE VALUE |Z| (Ω) OF IMPEDANCE
LOW-FREQUENCY SIDE
Log(|Z|)=R
HIGH-FREQUENCY SIDE
Log(|Z|)=—Logf—Log2πC
FREQUENCY f (Hz)

FIG. 5

22
22b
22a

FIG. 6
64
63
61
66
65
62
68
69
610
67

FIG. 7

1018
1013
1015
1014
1016
1012
101
104
103
105
106
Y
M
C
BK
1017
109
1010
108
102
1019
1011
107

FIG. 8

82
81
83
84

FIG. 9

84
83
81
9 2

FIG. 10

PLATINUM
DEPOSITED FILM
ALUMINUM SHEET
PLATINUM
DEPOSITED FILM
IMPEDANCE ANALYZER
SOLARTRON1260
SOLARTRON1296

Europäisches Patentamt
European Patent Office
Office européen des brevets

# EUROPEAN SEARCH REPORT

Application Number
EP 26 16 3179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2015 121769 A (SAMSUNG ELECTRONICS CO LTD) 2 July 2015 (2015-07-02) * paragraphs [0037], [0039], [0044] - [0045]; figure 3 * | 1-14 | INV. G03G15/02 |
| A | JP 2018 084653 A (S PRINTING SOLUTION CO LTD) 31 May 2018 (2018-05-31) * paragraph [0034]; figures 1-2 * | 1-14 | |
| A | JP 2015 034978 A (CANON KK) 19 February 2015 (2015-02-19) * paragraphs [0058], [0072] - [0078]; figures 2,3 * | 1 | |

TECHNICAL FIELDS SEARCHED (IPC)

G03G

The present search report has been drawn up for all claims

| Place of search | Date of completion of the search | Examiner |
|---|---|---|
| The Hague | 4 August 2026 | Camatchy Toppé, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

# ANNEX TO THE EUROPEAN SEARCH REPORT ON EUROPEAN PATENT APPLICATION NO.

EP 26 16 3179

This annex lists the patent family members relating to the patent documents cited in the above-mentioned European search report. The members are as contained in the European Patent Office EDP file on
The European Patent Office is in no way liable for these particulars which are merely given for the purpose of information.

04-08-2026

| Patent document cited in search report | Publication date | Patent family member(s) | Publication date |
|---|---|---|---|
| JP 2015121769 A | 02-07-2015 | EP 3073324 A1 | 28-09-2016 |
| | | JP 6067632 B2 | 25-01-2017 |
| | | JP 2015121769 A | 02-07-2015 |
| | | KR 20150059131 A | 29-05-2015 |
| | | US 2016266511 A1 | 15-09-2016 |
| | | WO 2015076606 A1 | 28-05-2015 |
| JP 2018084653 A | 31-05-2018 | JP 2018084653 A | 31-05-2018 |
| | | US 2019271931 A1 | 05-09-2019 |
| | | WO 2018096714 A1 | 31-05-2018 |
| JP 2015034978 A | 19-02-2015 | JP 2015034978 A | 19-02-2015 |
| | | US 2015016843 A1 | 15-01-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018084653 A
- JP 2018 A
- JP 084653 A